# EUROPEAN PATENT SPECIFICATION

(11) **EP 2 065 281 B1**
(45) Date of publication and mention of the grant of the patent: **14.07.2010**
(21) Application number: 08169964.7
(22) Date of filing: 26.11.2008
(51) Int. Cl.: B60W 30/14, B60K 31/10

(54) **Vehicle speed limiting system of motor vehicle**
Fahrzeuggeschwindigkeitsbeschränkungssystem von Kraftfahrzeug
Système de limitation de la vitesse du véhicule pour véhicule à moteur

(30) Priority: 30.11.2007 JP 2007310934
(43) Date of publication of application: 03.06.2009
(73) Proprietor: Toyota Jidosha Kabushiki Kaisha, Toyota-shi, Aichi-ken, 471-8571 (JP)
(72) Inventor: Matsunaga, Hitoshi, Toyota-shi Aichi-ken 471-8571 (JP); Oshima, Koji, Toyota-shi Aichi-ken 471-8571 (JP)
(74) Representative: TBK-Patent

(56) References cited:
- EP-A- 0 703 110
- EP-A- 1 057 684
- EP-A- 1 247 685
- GB-A- 2 298 937

## Description

### BACKGROUND OF THE INVENTION

### 1. Field of the Invention

The invention relates to a vehicle speed limiting system of a motor vehicle which performs a vehicle speed limiting operation to limit a running speed of the vehicle to a vehicle speed limit that has been set, when the running vehicle speed becomes higher than the vehicle speed limit.

### 2. Description of the Related Art

In recent years, a vehicle speed limiting system is known which enables the vehicle to run within a range of a preset vehicle speed limit. When the running vehicle speed required by the opening of a throttle valve that is driven according to the amount of depression of the accelerator pedal by the driver (i.e., the accelerator pedal travel) becomes higher than the preset vehicle speed limit, the vehicle speed limiting system performs a vehicle speed limiting operation to reduce the throttle opening, thereby to limit the running vehicle speed to the vehicle speed limit.

When the vehicle needs to be accelerated in the case of an emergency or when passing another vehicle, the vehicle speed limiting operation by the vehicle speed limiting system is cancelled by a vehicle speed limit cancelling means, so that the vehicle may be accelerated according to the intention of the driver reflected by the accelerator pedal travel. As disclosed in, for example, Japanese Patent Application Publication No. 2006-299909 (JP-A-2006-299909), the vehicle speed limit cancelling means cancels the vehicle speed limiting operation performed by the vehicle speed limiting system, when the accelerator pedal travel detected by an accelerator pedal travel detecting means for detecting the accelerator pedal travel is equal to or larger than a predetermined value. Also, a vehicle speed limit cancelling means for cancelling the vehicle speed limiting operation performed by the vehicle speed limiting system when the accelerator pedal is depressed down to a kick-down position is generally known.

EP1057684 discloses a vehicle speed limiting system according to the preamble of claims 1, 5 and 9.

In the related art as described above, the accelerator pedal needs to be depressed by a specified degree or larger or depressed down to the kick-down position so as to cancel the vehicle speed limiting operation performed by the vehicle speed limiting system. In this case, since the speed ratio of the automatic transmission is set based on the running vehicle speed that varies with the accelerator pedal travel, the vehicle may be accelerated by a larger degree than that intended by the driver if the speed ratio is changed immediately after cancellation of the vehicle speed limiting operation by the vehicle speed limiting system. This is because the speed ratio may be largely changed namely, the speed ratio that has been set based on the running vehicle speed may be changed to the smallest possible speed ratio at a time, through the depression of the accelerator pedal for cancellation of the vehicle speed limiting operation by the vehicle speed limiting system. Thus, the speed ratio is changed according to the position to which the accelerator pedal is depressed even in the case where the driver requests mild or slow acceleration, and the vehicle may not be accelerated according to the intention of the driver.

### SUMMARY OF THE INVENTION

The invention provides a vehicle speed limiting system of a motor vehicle, which enables the vehicle to be accelerated according to the intention of the driver when a vehicle speed limiting operation performed by the vehicle speed limiting system is cancelled.

A vehicle speed limiting system according to a first aspect of the invention, which performs a vehicle speed limiting operation to limit a running vehicle speed to a vehicle speed limit that has been set, when the running vehicle speed becomes higher than the vehicle speed limit, includes shift control means for setting a speed ratio of an automatic transmission based on the running vehicle speed that varies with a throttle opening, wherein the running vehicle speed is set in accordance with a required throttle opening determined based on an accelerator pedal travel, while the vehicle speed limit is set in accordance with a throttle opening limit to which the throttle opening is limited, vehicle speed limit cancelling means for cancelling the vehicle speed limiting operation, and accelerator pedal travel detecting means for detecting the accelerator pedal travel representing an amount of depression of an accelerator pedal. The vehicle speed limiting system further includes accelerator pedal travel change rate calculating means for calculating a rate of change of the accelerator pedal travel from the accelerator pedal travel detected by the accelerator pedal travel detecting means, and speed ratio changing means for changing the speed ratio of the automatic transmission when the vehicle speed limiting operation is cancelled, according to the rate of change of the accelerator pedal travel obtained immediately before cancellation of the vehicle speed limiting operation.

With the above arrangement, when the accelerator pedal is depressed by a specified degree or larger or depressed down to the kick-down position, for example, so as to cancel the vehicle speed limiting operation, the speed ratio established at the time of cancellation of the vehicle speed limiting operation is changed according to the rate of change of the accelerator pedal travel calculated by the accelerator pedal travel change rate calculating means immediately before the cancellation of the vehicle speed limiting operation. Namely, even where the accelerator pedal is depressed by a specified degree or larger or depressed down to the kick-down position, for cancellation of the vehicle speed limiting operation, the speed ratio is changed according to the rate of change of the accelerator pedal travel which reflects the intention of the driver immediately before the cancellation of the vehicle speed limiting operation. Thus, the acceleration requested by the driver when the vehicle speed limiting operation is cancelled by the vehicle speed limit cancelling means is achieved, and the vehicle may be accelerated according to the intention of the driver.

Also, since the speed ratio at the time of cancellation of the vehicle speed limiting operation is changed according to the rate of change of the accelerator pedal travel immediately before the cancellation of the vehicle speed limiting operation, the speed ratio after cancellation of the vehicle speed limiting operation is determined depending on the driver's manner of depressing the accelerator pedal. Therefore, two or more different control programs for individually determining the speed ratio after cancellation of the vehicle speed limiting operation need not be prepared with respect to vehicles having mutually different characters or characteristics, for example, vehicles of which slow or mild acceleration is generally required, such as vehicles having high-power prime movers or family-type vehicles, and vehicles of which rapid or hard acceleration is generally required, such as vehicles having low-power prime movers or sports-type vehicles, but a single control program is only required to achieve acceleration desired by the driver. Thus, the control program for determining the speed ratio when the vehicle speed limiting operation is cancelled may be shared among different types of vehicles.

In the vehicle speed limiting system according to the first aspect of the invention, the vehicle speed limit cancelling means may cancel the vehicle speed limiting operation when the rate of change of the accelerator pedal travel is equal to or larger than a predetermined rate of change.

With the above arrangement, the vehicle speed limiting operation is cancelled when the rate of change of the accelerator pedal travel is equal to or larger than the predetermined rate of change, and the speed ratio is changed according to the rate of change of the accelerator pedal travel which exceeds the predetermined rate of change. With the speed ratio thus changed according to the rate of change of the accelerator pedal travel which exceeds the predetermined rate of change, the acceleration requested by the driver when the vehicle speed limiting operation is cancelled is smoothly achieved, and the vehicle may be smoothly accelerated according to the intention of the driver. Furthermore, there is no need to separately provide a vehicle speed limit cancelling means, which is greatly advantageous in practicing the invention.

In the vehicle speed limiting system according to the first aspect of the invention, the speed ratio changing means may change the speed ratio at the time of cancellation of the vehicle speed limiting operation by a smaller degree as the rate of change of the accelerator pedal travel immediately before cancellation of the vehicle speed limiting operation is smaller, and may change the speed ratio by a larger degree as the rate of change of the accelerator pedal travel immediately before cancellation of the vehicle speed limiting operation is larger.

Also, in the vehicle speed limiting system according to the first aspect of the invention, the speed ratio changing means may change the speed ratio at the time of cancellation of the vehicle speed limiting operation such that a degree of downshifting of the automatic transmission decreases as the rate of change of the accelerator pedal travel immediately before cancellation of the vehicle speed limiting operation is smaller, and such that the degree of downshifting increases as the rate of change of the accelerator pedal travel immediately before cancellation of the vehicle speed limiting operation is larger.

With the above arrangement, when slow or mild acceleration is requested by the driver, the speed ratio at the time of cancellation of the vehicle speed limiting operation is changed by a small degree or slightly toward the low-speed side, in accordance with a small rate of change of the accelerator pedal travel which reflects the driver's intention. When rapid or hard acceleration is requested by the driver, on the other hand, the speed ratio is changed further by a large degree toward the low-speed side, in accordance with a large rate of change of the accelerator pedal travel which reflects the driver's intention. Thus, the acceleration requested by the driver when the vehicle speed limiting operation is cancelled is appropriately achieved in accordance with the rate of change of the accelerator pedal travel, and the vehicle may be accelerated according to the driver's intention.

A vehicle speed limiting system according to a second aspect of the invention, which performs a vehicle speed limiting operation to limit a running vehicle speed to a vehicle speed limit that has been set, when the running vehicle speed becomes higher than the vehicle speed limit, includes shift control means for setting a speed ratio of an automatic transmission, and vehicle speed limit cancelling means for cancelling the vehicle speed limiting operation. The vehicle speed limiting system further includes longitudinal running load detecting means for detecting a rate of load of a longitudinal running applied to the vehicle in a longitudinal direction as a running direction of the vehicle, and speed ratio changing means for changing the speed ratio of the automatic transmission when the vehicle speed limiting operation is cancelled, according to the rate of load of the longitudinal running detected immediately before the vehicle speed limiting operation is cancelled.

In the vehicle speed limiting system according to the second aspect of the invention, the running vehicle speed may be set in accordance with a required throttle opening determined based on an accelerator pedal travel, while the vehicle speed limit may be set in accordance with a throttle opening limit to which the throttle opening is limited, and the shift control means may set the speed ratio of the automatic transmission based on the running vehicle speed that varies with the throttle opening.

With the above arrangement, the speed ratio established when the vehicle speed limiting operation is cancelled is changed according to the rate of load of the longitudinal running detected by the longitudinal running load detecting means immediately before the cancellation of the vehicle speed limiting operation. Namely, the speed ratio is changed according to the rate of load of the longitudinal running applied to the vehicle body immediately before the vehicle speed limiting operation is cancelled. Thus, the acceleration requested by the driver when the vehicle speed limiting operation is cancelled by the vehicle speed limit cancelling means is smoothly achieved in accordance with the rate of load of the longitudinal running, and the vehicle may be accelerated according to the driver's intention.

Also, since the speed ratio at the time of cancellation of the vehicle speed limiting operation is changed according to the rate of load of the longitudinal running detected immediately before the cancellation of the vehicle speed limiting operation, the speed ratio after the cancellation of the vehicle speed limiting operation is determined depending on the manner of applying the rate of load of the longitudinal running to the vehicle body. Therefore, two or more different control programs for individually determining the speed ratio after cancellation of the vehicle speed limiting operation need not be prepared with respect to vehicles having mutually different characters or characteristics, for example, vehicles of which slow or mild acceleration is generally required, such as vehicles having high-power prime movers or family-type vehicles, and vehicles of which rapid or hard acceleration is generally required, such as vehicles having low-power prime movers or sports-type vehicles, but a single control program is only required to achieve acceleration desired by the driver. Thus, the control program for determining the speed ratio after cancellation of the vehicle speed limiting operation according to the rate of load of the longitudinal running may be shared among different types of vehicles.

In the vehicle speed limiting system according to the second aspect of the invention, the speed ratio changing means may change the speed ratio at the time of cancellation of the vehicle speed limiting operation by a larger degree as the rate of load of the longitudinal running detected immediately before cancellation of the vehicle speed limiting operation is larger, and may change the speed ratio by a smaller degree as the rate of load of the longitudinal running detected immediately before cancellation of the vehicle speed limiting operation is smaller.

In the vehicle speed limiting system according to the second aspect of the invention, the speed ratio changing means may change the speed ratio at the time of cancellation of the vehicle speed limiting operation such that a degree of downshifting of the automatic transmission increases as the rate of load of the longitudinal running detected immediately before cancellation of the vehicle speed limiting operation is larger, and such that the degree of downshifting decreases as the rate of load of the longitudinal running detected immediately before cancellation of the vehicle speed limiting operation is smaller.

With the above arrangement, the speed ratio at the time of cancellation of the vehicle speed limiting operation is changed by a small degree or slightly toward the low-speed side, according to the rate of load of the longitudinal running that is reduced when the vehicle starts running on a downhill, and is changed by a large degree toward the low-speed side according to the rate of load of the longitudinal running that increases when the vehicle starts running on an uphill. Thus, the acceleration requested by the driver when the vehicle speed limiting operation is cancelled by the vehicle speed limit cancelling means is appropriately achieved in accordance with the rate of load of the longitudinal running, and the vehicle may be accelerated according to the driver's intention.

A vehicle speed limiting system according to a third aspect of the invention, which performs a vehicle speed limiting operation to limit a running vehicle speed to a vehicle speed limit that has been set when the running vehicle speed becomes higher than the vehicle speed limit, includes: shift control means for setting a speed ratio of an automatic transmission, and vehicle speed limit cancelling means for cancelling the vehicle speed limiting operation. The vehicle speed limiting system further includes lateral load detecting means for detecting at least one of a rate of a steering angle and a rate of a lateral acceleration applied to the vehicle in a lateral direction perpendicular to a running direction of the vehicle, and speed ratio changing means for changing the speed ratio of the automatic transmission when the vehicle speed limiting operation is cancelled, according to at least one of the rate of the steering angle detected immediately before cancellation of the vehicle speed limiting operation and the rate of the lateral acceleration detected immediately before cancellation of the vehicle speed limiting operation.

In the vehicle speed limiting system according to the third aspect of the invention, the running vehicle speed may be set in accordance with a required throttle opening determined based on an accelerator pedal travel, while the vehicle speed limit may be set in accordance with a throttle opening limit to which the throttle opening is limited, and the shift control means may set the speed ratio of the automatic transmission based on the running vehicle speed that varies with the throttle opening.

With the above arrangement, when the vehicle speed limiting operation is cancelled by the vehicle speed limit cancelling means, the speed ratio at the time of cancellation of the vehicle speed limiting operation is changed according to the rate of the steering angle during changing of lanes, or the like, or the rate of the lateral acceleration during cornering, or the like, which is detected by the lateral load detecting means immediately before the cancellation of the vehicle speed limiting operation. Namely, the speed ratio is changed according to the rate of the steering angle or rate of lateral acceleration applied to the vehicle body immediately before the cancellation of the vehicle speed limiting operation. Thus, the acceleration requested by the driver when the vehicle speed limiting operation is cancelled is achieved with security according to the rate of the steering angle or the rate of the lateral acceleration during cornering, for example, and the vehicle may be safely accelerated according to the driver's intention.

Also, since the speed ratio at the time of cancellation of the vehicle speed limiting operation is changed according to the rate of the steering angle or the rate of the lateral acceleration during cornering, or the like, which is detected immediately before cancellation of the vehicle speed limiting operation, the speed ratio after cancellation of the vehicle speed limiting operation is determined depending on the manner of applying the rate of the steering angle or rate of lateral acceleration during cornering, or the like, to the vehicle body. Therefore, two or more different control programs for individually determining the speed ratio after cancellation of the vehicle speed limiting operation need not be prepared with respect to vehicles having mutually different characters or characteristics, for example, vehicles of which slow or mild acceleration is generally required, such as vehicles having high-power prime movers or family-type vehicles, and vehicles of which rapid or hard acceleration is generally required, such as vehicles having low-power prime movers or sports-type vehicles, but a single control program is only required to achieve acceleration desired by the driver. Thus, the control program for determining the speed ratio after cancellation of the vehicle speed limiting operation according to the rate of the steering angle or the rate of the lateral acceleration during cornering, or the like, may be shared among different types of vehicles.

In the vehicle speed limiting system according to the third aspect of the invention, the speed ratio changing means may change the speed ratio at the time of cancellation of the vehicle speed limiting operation by a larger degree as at least one of the rate of the steering angle detected immediately before cancellation of the vehicle speed limiting operation and the rate of the lateral acceleration detected immediately before cancellation of the vehicle speed limiting operation is smaller, and may change the speed ratio by a smaller degree as at least one of the rate of the steering angle detected immediately before cancellation of the vehicle speed limiting operation and the rate of the lateral acceleration detected immediately before cancellation of the vehicle speed limiting operation is larger.

In the vehicle speed limiting system according to the third aspect of the invention, the speed ratio changing means may change the speed ratio at the time of cancellation of the vehicle speed limiting operation such that a degree of downshifting of the automatic transmission increases as at least one of the rate of the steering angle detected immediately before cancellation of the vehicle speed limiting operation and the rate of the lateral acceleration detected immediately before cancellation of the vehicle speed limiting operation is smaller, and such that the degree of downshifting decreases as at least one of the rate of the steering angle detected immediately before cancellation of the vehicle speed limiting operation and the rate of the lateral acceleration detected immediately before cancellation of the vehicle speed limiting operation is larger.

With the above arrangement, the speed ratio at the time of cancellation of the vehicle speed limiting operation is changed by a small degree or slightly toward the low-speed side, according to the rate of the steering angle that becomes large when the driver steers largely to change lanes, or the rate of the lateral acceleration that becomes large when the vehicle makes a large turn or a sharp turn. On the other hand, the speed ratio at the time of cancellation of the vehicle speed limiting operation is changed by a large degree further toward the low-speed side, according to the rate of the steering angle that is reduced when the driver steers by a small degree to change lanes, or the rate of the lateral acceleration that is reduced when the vehicle makes a small turn at a corner having a large radius of curvature. Thus, the acceleration requested by the driver when the vehicle speed limiting operation is cancelled is achieved with security according to the rate of the steering angle or the rate of the lateral acceleration, and the vehicle may be safely accelerated according to the driver's intention.

The vehicle speed limiting system according to the first aspect of the invention may further include longitudinal running load detecting means for detecting a rate of load of a longitudinal running applied to the vehicle in a longitudinal direction as a running direction of the vehicle. In this system, the speed ratio changing means may change the speed ratio at the time of cancellation of the vehicle speed limiting operation, according to both of the rate of change of the accelerator pedal travel obtained and the rate of load of the longitudinal running detected immediately before cancellation of the vehicle speed limiting operation.

With the above arrangement, even when the accelerator pedal is depressed by a specified degree or larger or is depressed down to the kick-down position, the speed ratio at the time of cancellation of the vehicle speed limiting operation is changed, according to the rate of change of the accelerator pedal travel which reflects the driver's intention and the rate of load of the longitudinal running applied to the vehicle in the longitudinal direction or running direction of the vehicle. Thus, the acceleration requested by the driver when the vehicle speed limiting operation is cancelled is appropriately achieved in accordance with the rate of change of the accelerator pedal travel and the rate of load of the longitudinal running of the vehicle, and the vehicle may be smoothly accelerated according to the driver's intention, in view of the rate of load of the longitudinal running.

In the vehicle speed limiting system as described above, the speed ratio changing means may correct the speed ratio that is changed by a smaller degree as the rate of change of the accelerator pedal travel is smaller, by changing the speed ratio by a larger degree as the rate of detected load of the longitudinal running is larger, and may correct the speed ratio that is changed by a larger degree as the rate of change of the accelerator pedal travel is larger, by changing the speed ratio by a smaller degree as the rate of detected load of the longitudinal running is smaller.

With the above arrangement, while the speed ratio at the time of cancellation of the vehicle speed limiting operation is changed by a small degree or slightly toward the low-speed side according to a small rate of change of the accelerator pedal travel which reflects the driver's intention when the driver requests slow or mild acceleration, the speed ratio is corrected or re-changed by a larger degree as the rate of load of the longitudinal running is larger. On the other hand, while the speed ratio is changed by a large degree toward the low-speed side according to a large rate of change of the accelerator pedal travel which reflects the driver's intention when the driver requests rapid or hard acceleration, the speed ratio is corrected or re-changed by a smaller degree as the rate of load of the longitudinal running is smaller. Thus, the acceleration requested by the driver when the vehicle speed limiting operation is cancelled is more appropriately achieved according to the rate of load of the longitudinal running applied to the vehicle as well as the rate of change of the accelerator pedal travel, and the vehicle may be more smoothly accelerated according to the driver's intention, in view of the rate of load of the longitudinal running.

The vehicle speed limiting system according to the first aspect of the invention may further include lateral load detecting means for detecting at least one of a rate of a steering angle and a rate of a lateral acceleration applied to the vehicle in a lateral direction perpendicular to a running direction of the vehicle. In this system, the speed ratio changing means may change the speed ratio at the time of cancellation of the vehicle speed limiting operation, according to both of the rate of change of the accelerator pedal travel obtained immediately before cancellation of the vehicle speed limiting operation and at least one of the rate of the steering angle detected immediately before cancellation of the vehicle speed limiting operation and the rate of the lateral acceleration detected immediately before cancellation of the vehicle speed limiting operation.

With the above arrangement, even when the accelerator pedal is depressed by a specified degree or larger, or depressed to the kick-down position, the speed ratio at the time of cancellation of the vehicle speed limiting operation is changed, according to the rate of change of the accelerator pedal travel which reflects the driver's intention and the rate of the steering angle or the rate of the lateral acceleration applied to the vehicle in the lateral direction. Thus, the acceleration requested by the driver when the vehicle speed limiting operation is cancelled is achieved with security according to the rate of change of the accelerator pedal travel and the rate of the steering angle or rate of lateral acceleration of the vehicle, and the vehicle may be safely accelerated according to the driver's intention, in view of the rate of the steering angle or the rate of the lateral acceleration.

In the vehicle speed limiting system as described above, the speed ratio changing means may correct the speed ratio that is changed by a smaller degree as the rate of change of the accelerator pedal travel is smaller, by changing the speed ratio by a larger degree as at least one of the rate of the steering angle and the rate of the lateral acceleration is smaller, and may correct the speed ratio that is changed by a larger degree as the rate of change of the accelerator pedal travel is larger, by changing the speed ratio by a smaller degree as at least one of the rate of the steering angle and the rate of the lateral acceleration is larger.

With the above arrangement, while the speed ratio at the time of cancellation of the vehicle speed limiting operation is changed by a small degree or slightly toward the low-speed side according to a small rate of change of the accelerator pedal travel which reflects the driver's intention when the driver requests slow or mild acceleration, the speed ratio is corrected to be changed by a larger degree as the rate of the steering angle or the rate of the lateral acceleration is smaller. On the other hand, while the speed ratio is changed by a large degree further toward the low-speed side according to a large rate of change of the accelerator pedal travel which reflects the driver's intention when the driver requests rapid or hard acceleration, the speed ratio is corrected to be changed by a smaller degree as the rate of the steering angle or the rate of the lateral acceleration is larger. Thus, the acceleration requested by the driver when the vehicle speed limiting operation is cancelled is more appropriately achieved in accordance with the rate of the steering angle or rate of lateral acceleration applied to the vehicle as well as the rate of change of the accelerator pedal travel, and the vehicle may be more safely accelerated according to the driver's intention, in view of the rate of the steering angle or rate of lateral acceleration.

In the vehicle speed limiting system according to the above aspects of the invention, the speed ratio changing means may include a change-over switch that switches a mode of changing the speed ratio when the vehicle speed limiting operation is cancelled, between a first mode in which the speed ratio is changed based on a first speed-ratio determining condition set based on the vehicle speed and at least one of the accelerator pedal travel and a difference rotational between a rotational speed of a prime mover of the vehicle and a turbine speed of a torque converter, and a second mode in which the speed ratio is changed based on a second speed-ratio determining condition different from the first speed-ratio determining condition, and the change-over switch may be switched depending on at least one of a character of the vehicle and a power generated by the prime mover of the vehicle.

With the above arrangement, the change-over switch is provided for switching the mode of changing the speed ratio at the time of cancellation of the vehicle speed limiting operation, between the first mode using the first speed-ratio determining condition set based on the accelerator pedal travel or a difference between the rotational speed of the prime mover of the vehicle and the turbine speed, and the vehicle speed, and the second mode using the second speed-ratio determining condition different from the first speed-ratio determining condition. The change-over switch is switched between the two modes depending on the character of the vehicle, or the power generated by the prime mover of the vehicle. When the change-over switch is placed in the first mode using the first speed-ratio determining condition, the speed ratio at the time of cancellation of the vehicle speed limiting operation is changed according to the first speed-ratio determining condition, so as to achieve slow or mild acceleration. When the change-over switch is placed in the second mode using the second speed-ratio determining condition, on the other hand, the speed ratio at the time of cancellation of the vehicle speed limiting operation is changed according to the second speed-ratio determining condition, so as to achieve powerful acceleration different from that achieved in the first mode using the first speed-ratio determining condition. Thus, the vehicle may be accelerated according to the intention of the driver who selected the type of the vehicle.

In the vehicle speed limiting system as described above, switching of the change-over switch depending on the character of the vehicle may be performed depending on whether the vehicle has a high-power engine or a low-power engine, and whether the vehicle requires mild acceleration or powerful acceleration.

In sum, the speed ratio at which the vehicle runs when the vehicle speed limiting operation is cancelled is changed according to the rate of change of the accelerator pedal travel immediately before the cancellation of the vehicle speed limiting operation, so that the speed ratio at the time of cancellation of the vehicle speed limiting operation is changed according to the rate of change of the accelerator pedal which reflects the driver's intention. Thus, the acceleration requested by the driver when the vehicle speed limiting operation is cancelled is achieved, and the vehicle may be accelerated according to the driver's intention.

### BRIEF DESCRIPTION OF THE DRAWINGS

The foregoing and/or further objects, features and advantages of the invention will become more apparent from the following description of preferred embodiments with reference to the accompanying drawings, in which like numerals are used to represent like elements and wherein:
FIG. 1 is a schematic view showing a part of a vehicle having a vehicle speed limiting system according to a first embodiment of the invention;
FIG. 2 is a schematic view showing one example of automatic transmission of the vehicle having the vehicle speed limiting system according to the first embodiment of the invention;
FIG. 3 is a table indicating the operation of the automatic transmission of the vehicle having the vehicle speed limiting system according to the first embodiment of the invention;
FIG. 4 is a block diagram showing the configuration of a control system including ECU and other components, in the vehicle speed limiting system according to the first embodiment of the invention;
FIG. 5 is a view showing a shift map for use in shift control of the automatic transmission according to the first embodiment of the invention;
FIG. 6 is a time chart showing changes in the vehicle speed, accelerator pedal travel, throttle opening and the gear position of the automatic transmission with time, after overriding based on a fist gear-position determining condition, in the vehicle having the vehicle speed limiting system according to the first embodiment of the invention;
FIG. 7 is a time chart showing changes in the vehicle speed, accelerator pedal travel, throttle opening and the gear position with time, after overriding based on a second gear-position determining condition, in the vehicle having the vehicle speed limiting system according to the first embodiment of the invention;
FIG. 8 is a time chart showing changes in the gear position of the automatic transmission with respect to the rate of change of the accelerator pedal travel, in the vehicle having the vehicle speed limiting system according to the first embodiment of the invention;
FIG. 9 is a flowchart illustrating the flow of shift control for changing the gear position of the automatic transmission after cancellation of a vehicle speed limiting operation performed by ECU, in the vehicle speed limiting system according to the first embodiment of the invention;
FIG. 10 is a graph showing the vehicle speed limit, vehicle speed and the throttle opening during the vehicle speed limiting operation of the vehicle speed limiting system according to the first embodiment of the invention; and
FIG. 11 is a flowchart illustrating the flow of shift control for changing the gear position of the automatic transmission after cancellation of a vehicle speed limiting operation performed by ECU according to a second embodiment of the invention.

### DETAILED DESCRIPTION OF EMBODIMENTS

Some embodiments of the invention will be described with reference to the drawings.

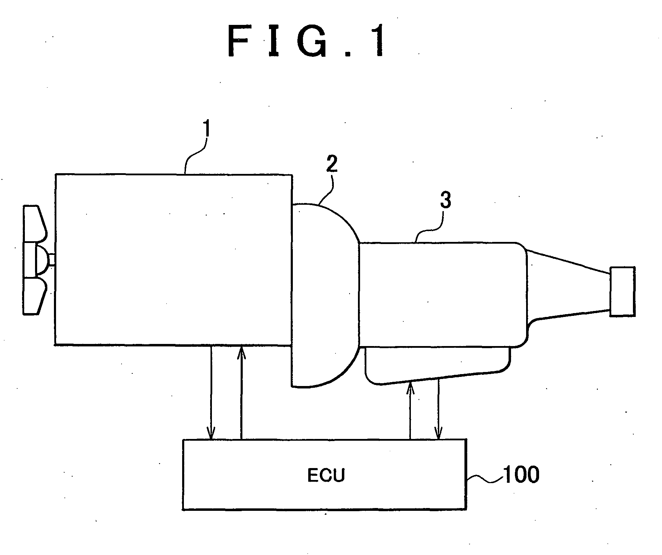

Referring to FIG. 1, a power train of a vehicle having a vehicle speed limiting system according to a first embodiment of the invention will be described. The vehicle of this embodiment is a FR (front-engine, rear-drive) vehicle on which an engine 1 as a prime mover, an automatic transmission 3 having a torque converter 2, ECU 100 and others are installed. The vehicle speed limiting system of this invention implements a vehicle speed limiting operation and an operation to cancel the vehicle speed limiting operation, according to programs executed by the ECU 100. In the following, each of the engine 1, torque converter 2, automatic transmission 3 and the ECU 100 will be described.

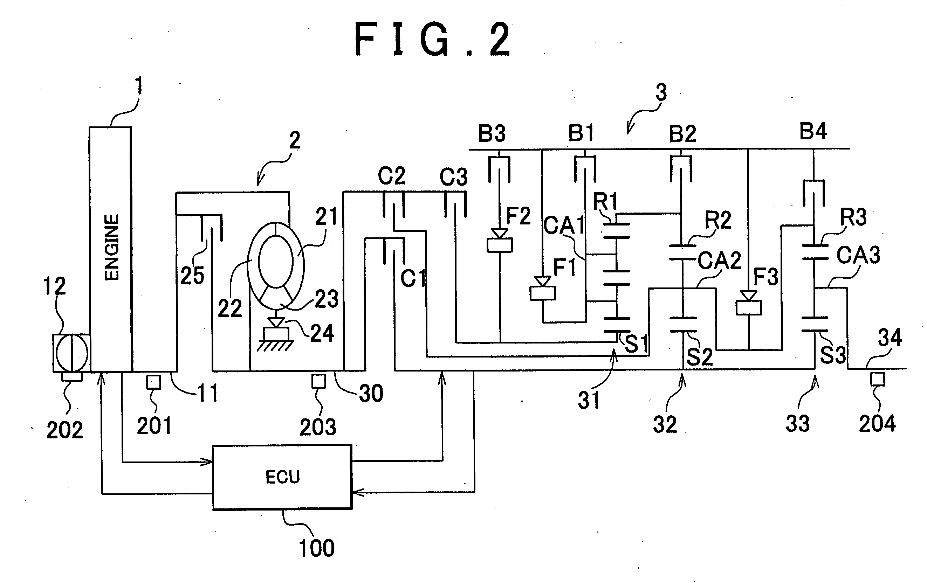

As shown in FIG. 2, a crankshaft 11 as an output shaft of the engine 1 is connected to an input shaft of the torque converter 2. The rotational speed of the crankshaft 11 (i.e., engine speed) is detected by an engine speed sensor 201.

The amount of air drawn into the engine 1 is controlled by an electronically controlled throttle valve 12. The throttle valve 12 is able to electronically control the throttle opening, independently of the amount of depression of the accelerator pedal by the driver, and the degree of opening of the throttle valve 12 (i.e., throttle opening) is detected by a throttle position sensor 202.

The throttle opening of the throttle valve 12 is controlled by the ECU 100. Specifically, the ECU 100 controls the throttle opening of the throttle valve 12, so as to provide the optimum intake air amount (target intake air amount) appropriate to operating conditions of the engine 1, such as the engine speed detected by the engine speed sensor 201, and the amount of depression of the accelerator pedal by the driver (i.e., accelerator pedal travel). More specifically, the ECU 100 detects the actual throttle opening of the throttle valve 12 by means of the throttle position sensor 202, and controls a throttle motor of the throttle valve 12 in a feedback manner so that the actual throttle opening becomes equal to a throttle opening (target throttle opening) that provides the above-indicated target intake air amount.

The torque converter 2 includes a pump impeller 21 connected to its input shaft, a turbine wheel (turbine) 22 connected to its output shaft, a stator 33 having a torque amplifying function, and a one-way clutch 24, and performs power transmission via a fluid between the pump impeller 21 and the turbine wheel 22.

The torque converter 2 is provided with a lock-up clutch 25 operable to directly connect the input shaft and the output shaft to each other. When the lock-up clutch 25 is fully engaged, the pump impeller 21 and the turbine wheel 22 rotate together as a unit. When the lock-up clutch 25 is engaged in a certain slipping condition, the turbine wheel 22 rotates with a certain amount of slip relative to the pump impeller 21, to follow rotation of the pump impeller 21.

The automatic transmission 3 is a planetary gear type transmission having a double-pinion-type first planetary gear set 31, a single-pinion-type second planetary gear set 32, and a single-pinion-type third planetary gear set 33.

The rotational speed of an input shaft 30 of the automatic transmission 3 (which is equal to the turbine speed of the torque converter 2) is detected by an input shaft speed sensor 203. The rotational speed of an output shaft 34 of the automatic transmission 3 is detected by an output shaft speed sensor 204.

A sun gear S1 of the first planetary gear set 31 is selectively connected to the input shaft 30 via a clutch C3. The sun gear S1 is also selectively connected to a housing as a non-rotating member, via a one-way clutch F2 and a brake B3, so that the sun gear S1 is inhibited from rotating in the reverse direction (i.e., in a direction opposite to that of rotation of the input shaft 30). A carrier CA1 of the first planetary gear set 31 is selectively connected to the housing via a brake B1, and is always inhibited from rotating in the reverse direction, by a one-way clutch F1 provided in parallel with the brake B1. A ring gear R1 of the first planetary gear set 31 is coupled integrally with a ring gear R2 of the second planetary gear set 32, and is selectively connected to the housing via a brake B2.

A sun gear S2 of the second planetary gear set 32 is coupled integrally with a sun gear S3 of the third planetary gear set 33, and is selectively connected to the input shaft 30 via a clutch C1. A carrier CA2 of the second planetary gear set 32 is coupled integrally with a ring gear R3 of the third planetary gear set 33, and is selectively connected to the input shaft 30 via a clutch C2, while being selectively connected to the housing via a brake B4. Further, the carrier CA2 is always inhibited from rotating in the reverse direction, by a one-way clutch F3 provided in parallel with the brake B4. A carrier CA3 of the third planetary gear set 33 is coupled integrally with the output shaft 34.

The gear position (speed) of the automatic transmission 3 as described above is set by engaging or releasing a selected one or ones of the clutches C1 - C3, brakes B1 - B4, and one-way clutches F1 - F3, as friction coupling elements.

The automatic transmission 3 is provided with a shift lever adapted to be operated by the driver, and the shift lever is operated so as to be placed in a selected one of, for example, P range (parking range), R range (reverse-drive range), N range (neutral range), and D range (forward-drive range).

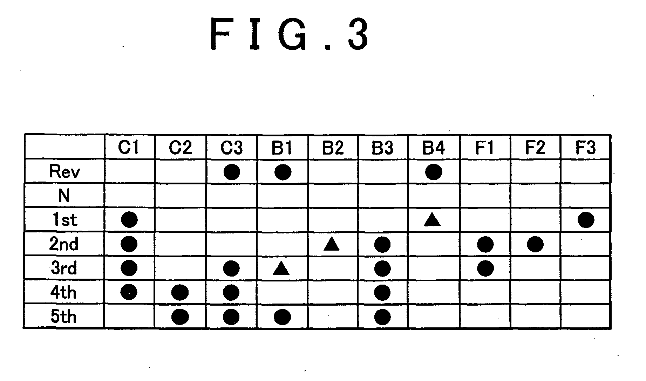

The engaged/released states of the clutches C1 - C3, brakes B1 - B4 and the one-way clutches F1 - F3 of the automatic transmission 3 are indicated in the table of FIG. 3. In the table of FIG. 3, the black solid circle represents the "engaged state", and the blank represents the "released state", while the black solid triangle represents the "engaged state during engine braking".

In the automatic transmission 3 of this embodiment, shifting from the 1st-speed gear position to the 2nd-speed gear position (1→2 shifting) is accomplished by engaging the brake B3, and the brake B2 is further engaged in an engine-brake range in which an engine braking effect needs to be produced. The brake B2 has an engaging torque capacity that is set to be smaller than that of the brake B3.

Shifting from the 2nd-speed gear position to the 3rd-speed gear position (2→3 shifting) is accomplished by engaging the clutch C3, and the brake B1 is further engaged in an engine-brake range in which an engine braking effect needs to be produced. Shifting from the 3rd-speed gear position to the 4th-speed gear position (3→4 shifting) is accomplished by engaging the clutch C2.

Shifting from the 4th-speed gear position to the 5th-speed gear position (4→5 shifting) is accomplished by releasing the clutch C1 and engaging the brake B1 at the same time, through clutch-to-clutch shift control.

The engine 1 and the automatic transmission 3 (including the torque converter 2) as described above are controlled by the ECU 100.

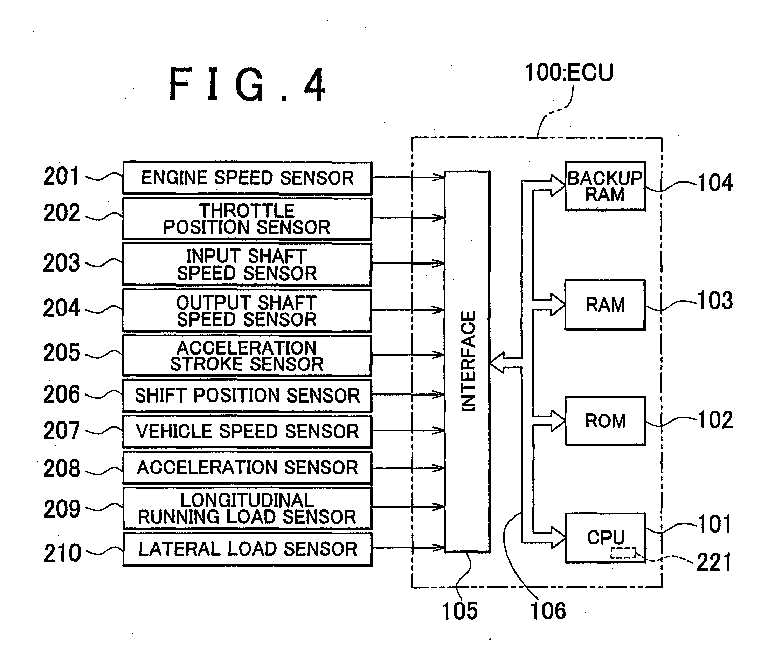

As shown in FIG. 4, the ECU 100 includes CPU 101, ROM 102, RAM 103, backup RAM 104, and other components.

The ROM 102 stores therein various programs including programs for implementing shift control for setting the gear position of the automatic transmission 3 according to the running conditions of the vehicle, in addition to controls relating to basic operations of the vehicle. The content of the shift control will be specifically described later.

The CPU 101 performs computations based on various control programs and/or maps stored in the ROM 102. The RAM 103 is a memory that temporarily stores the results of computations performed by the CPU 101, data received from the respective sensors, and so forth, and the backup RAM 104 is a nonvolatile memory that stores data, or the like, to be stored when the engine 1 is stopped.

The CPU 101, ROM 102, RAM 103 and the backup RAM 104 are connected to each other via a bus 106, and are also connected to an interface 105.

Sensors connected to the interface 105 of the ECU 100 include, for example, the engine speed sensor 201, throttle position sensor 202, input shaft speed sensor 203, output shaft speed sensor 204, acceleration stroke sensor 205 for detecting the accelerator pedal travel or the amount of depression of the accelerator pedal, shift position sensor 206 for detecting the shift position of the automatic transmission 3, vehicle speed sensor 207 for detecting the running speed of the vehicle, acceleration sensor 208 for detecting the acceleration G of the vehicle, longitudinal running load sensor 209 as a longitudinal running load detecting means for detecting the rate of load of the longitudinal running applied to the vehicle in the longitudinal direction during, for example, running on slopes, and a lateral load senor 210 as a lateral load detecting means for detecting the rate of the steering angle or the rate of the lateral acceleration applied to the vehicle in the lateral direction. The ECU 100 receives a signal from each of the above-indicated sensors.

The ECU 100 performs various controls of the engine 1 including control of the throttle opening of the throttle valve 12 of the engine 1, based on output signals of the above-indicated various sensors.

The ECU 100 generates a lock-up clutch control signal to the torque converter 2, so that the engaging pressure of the lock-up clutch 25 is controlled based on the lock-up clutch control signal. The ECU 100 also generates solenoid control signals (hydraulic command signals) to the automatic transmission 3. As a result, linear solenoid valves or ON/OFF solenoid valves of a hydraulic circuit of the automatic transmission 3 are controlled based on the solenoid control signals, so that the clutches C1 - C3, brakes B1 - B4 and the one-way clutches F1 - F3 are engaged or released into specified states so as to establish a selected one of the gear positions (1st-speed to 5th-speed gear positions).

Furthermore, when the running speed of the vehicle is higher than a vehicle speed limit which will be described later, the ECU 100 performs a vehicle speed limiting operation to limit the running vehicle speed to the vehicle speed limit. Namely, when the running vehicle speed responsive to the required throttle opening represented by the amount of depression of the accelerator pedal by the driver (i.e., accelerator pedal travel) is higher than the vehicle speed limit to which the vehicle speed is limited according to the actual throttle opening, the vehicle speed limiting operation is performed so as to limit the running vehicle speed to the vehicle speed limit. The vehicle speed limit is set according to a throttle opening limit to which the actual throttle opening is limited, and the vehicle speed limiting operation is performed so that the actual throttle opening does not become larger than the throttle opening limit. In this case, the vehicle speed limit is set by operating a manual switch provided in the vicinity of the dashboard of the driver's seat, and the vehicle speed limiting operation may be cancelled by operating the manual switch.

The ECU 100 includes a shift control means which implements "shift control" as described below.

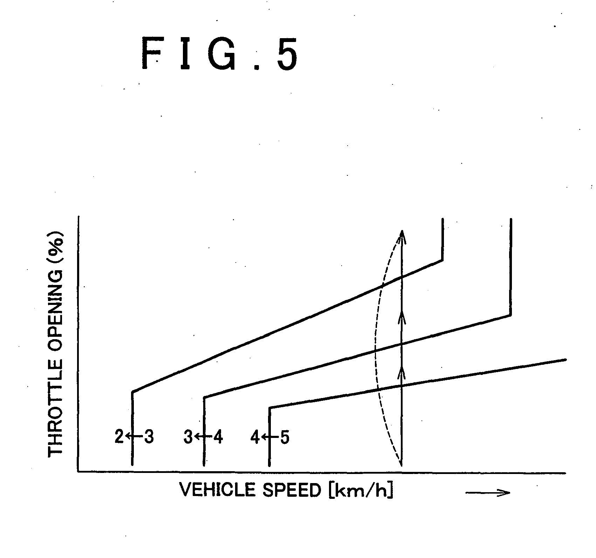

Initially, a shift map for use in the shift control of this embodiment will be explained with reference to FIG. 5.

In the shift map of FIG. 5, which is stored in the ROM 102 of the ECU 100, a plurality of regions used for determining an appropriate gear position are set or defined with respect to the vehicle speed and the throttle opening as parameters. Each of the regions in the shift map is defined by two or more shifting lines (gear-position switching lines). In the shift map of FIG. 5, only the downshifting lines are illustrated.

Next, the basic operation of the ECU 100 that performs the shift control will be explained.

The ECU 100 calculates a target gear position with reference to the shift map of FIG. 5, based on the output signals of the vehicle speed sensor 207, throttle position sensor 202 and the acceleration stroke sensor 205, and determines whether a shifting operation is needed, namely, the automatic transmission 3 needs to be shifted up or down, by comparing the target gear position with the current gear position.

If it is found, as a result of the above determination, that no shifting is needed (where the target gear position and the current gear position are equal to each other, and the gear position is appropriately established), the ECU 100 generates solenoid control signals (hydraulic command signals) for maintaining the current gear position, to the automatic transmission 3.

If, on the other hand, the target gear position and the current gear position are different from each other, shift control is performed. For example, if the running conditions of the vehicle change over the downshifting line "5 → 4" while the vehicle is running with the automatic transmission 3 placed in the "5th-speed" gear position, the target gear position calculated from the shift map is set to the "4th-speed" gear position, and the ECU 100 generates solenoid control signals (hydraulic command signals) for establishing the 4th-speed gear position, to the automatic transmission 3, so as to effect shifting (5→4 downshifting) from the 5th-speed gear position to the 4th-speed gear position.

The CPU 101 of the ECU 100 includes an accelerator pedal travel change rate calculating means 221 for calculating the rate of change of the accelerator pedal travel from the output signal (indicative of the accelerator pedal travel) of the acceleration stroke sensor 205. The CPU 101 further includes a vehicle speed limit cancelling means for cancelling a vehicle speed limiting operation, and the vehicle speed limiting operation is temporarily cancelled, or is overridden, by the vehicle speed limit cancelling means. The vehicle speed limit cancelling means compares the rate of change dpapbf of the accelerator pedal travel which is calculated by the accelerator pedal travel change rate calculating means 221, with a first predetermined rate of change X1 of the accelerator pedal travel which is stored in the ROM 102, and cancels the vehicle speed limiting operation when the rate of change dpapbf of the accelerator pedal travel calculated by the accelerator pedal travel change rate calculating means 221 is larger than the first predetermined rate of change X1 stored in the ROM 102 (dpapbf > X1). The ROM 102 also stores, in advance, a second predetermined rate of change X2 that is larger than the first predetermined rate of change X1 of the accelerator pedal travel (X2 > X1), and a third predetermined rate of change X3 that is larger than the second predetermined rate of change X2 (X3 > X2).

The ECU 100 further includes a gear position changing means as a speed ratio changing means for changing the gear position (speed ratio) established when the vehicle speed limiting operation is cancelled by the vehicle speed limit cancelling means, according to the rate of change dpapbf of the accelerator pedal travel which is calculated by the accelerator pedal travel change rate calculating means 221 immediately before cancellation of the vehicle speed limiting operation.

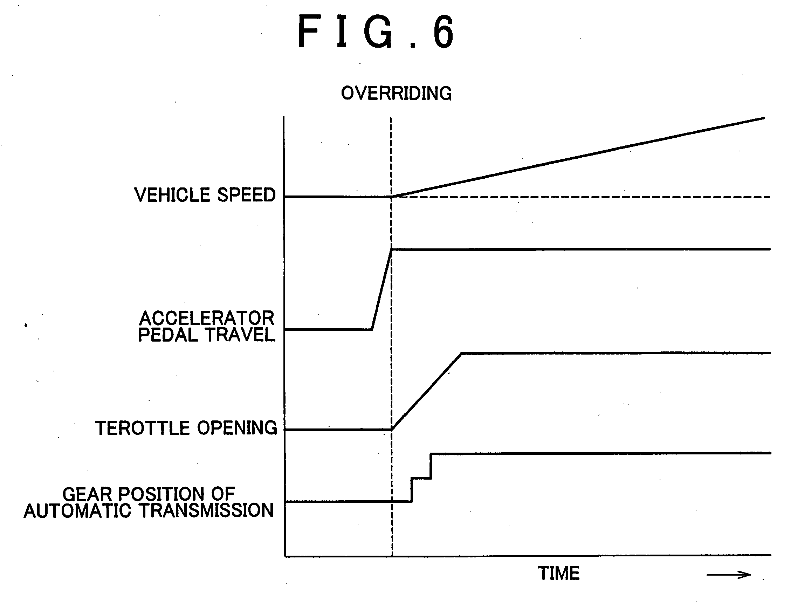

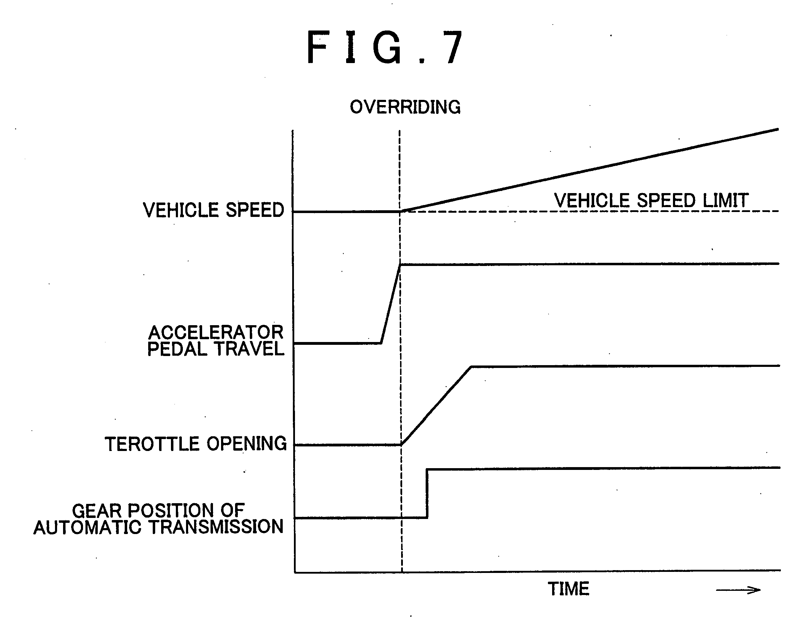

The gear position changing means is provided with a change-over switch that switches the manner of changing the gear position when the vehicle speed limiting operation is cancelled by the vehicle speed limit cancelling means, between a first mode as shown in FIG. 6 and a second mode as shown in FIG. 7. In the first mode of FIG. 6, the gear position is changed by one step at a time (step by step), based on a first gear-position determining condition (first speed-ratio determining condition) set based on the vehicle speed and the accelerator pedal travel, namely, based on each downshifting line of the shift map of FIG. 5. In the second mode of FIG. 7, the gear position may be changed by two or more steps at a time by skipping one or more gear position(s), based on a second gear-position determining condition (second speed-ratio determining condition) different from the first gear-position determining condition, namely, based on the rate of change dpapbf of the accelerator pedal travel. In the first embodiment, the change-over switch is placed in the second mode using the second gear-position determining condition, and the gear position at the time of cancellation of the vehicle speed limiting operation is changed based on the second gear-position determining condition. The change-over switch is adapted to be switched between the above two modes, according to the character of the vehicle, or the power generated by the engine (prime mover) installed on the vehicle.

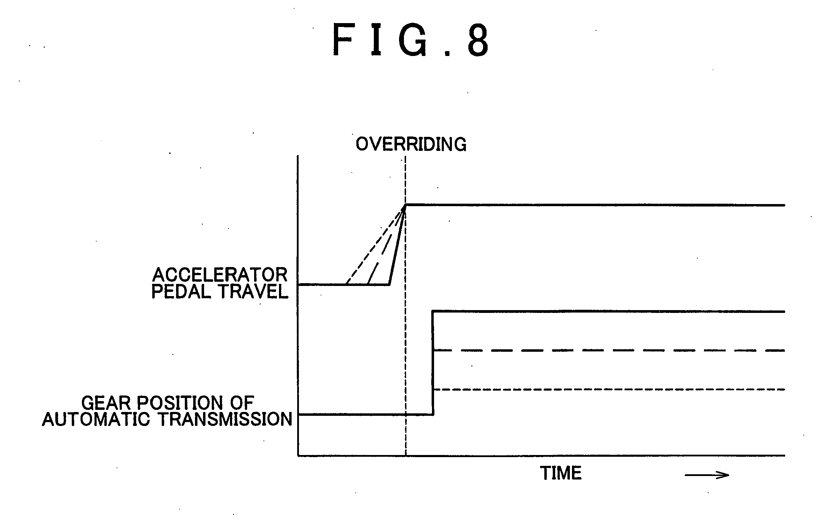

When the rate of change dpapbf of the accelerator pedal travel immediately before the vehicle speed limiting operation is cancelled is smaller than the second predetermined rate of change X2 (dpapbf > X2), as indicated by a short dashed line in FIG. 8, the gear position changing means changes the gear position at the time of cancellation of the vehicle speed limiting operation, to a gear position that is lower by one step toward the Low gear side (a small degree of downshifting). When the rate of change dpapbf of the accelerator pedal travel immediately before the vehicle speed limiting operation is cancelled is equal to or larger than the second predetermined rate of change X2 and smaller than the third predetermined rate of change X3 (X2 ≤ dpapbf < X3), as indicated by a long dashed line in FIG. 8, the gear position changing means changes the gear position to a gear position that is lower by two steps toward the Low gear side. When the rate of change dpapbf of the accelerator pedal travel immediately before the vehicle speed limiting operation is cancelled is larger than the third predetermined rate of change X3 (dpapbf > X3), as indicated by a solid line in FIG. 8, the gear position changing means changes the gear position to the lowest possible or feasible gear position toward the Low gear side (a large degree of downshifting). Namely, the smaller the rate of change dpapbf of the accelerator pedal travel immediately before the vehicle speed limiting operation is cancelled, the smaller degree by which the gear position changing means changes the gear position at the time of cancellation of the vehicle speed limiting operation toward the Low gear side. On the other hand, the larger the rate of change dpapbf of the accelerator pedal travel immediately before the vehicle-speed limiting operation is cancelled, the larger degree by which the gear position changing means changes the gear position toward the Low gear side.

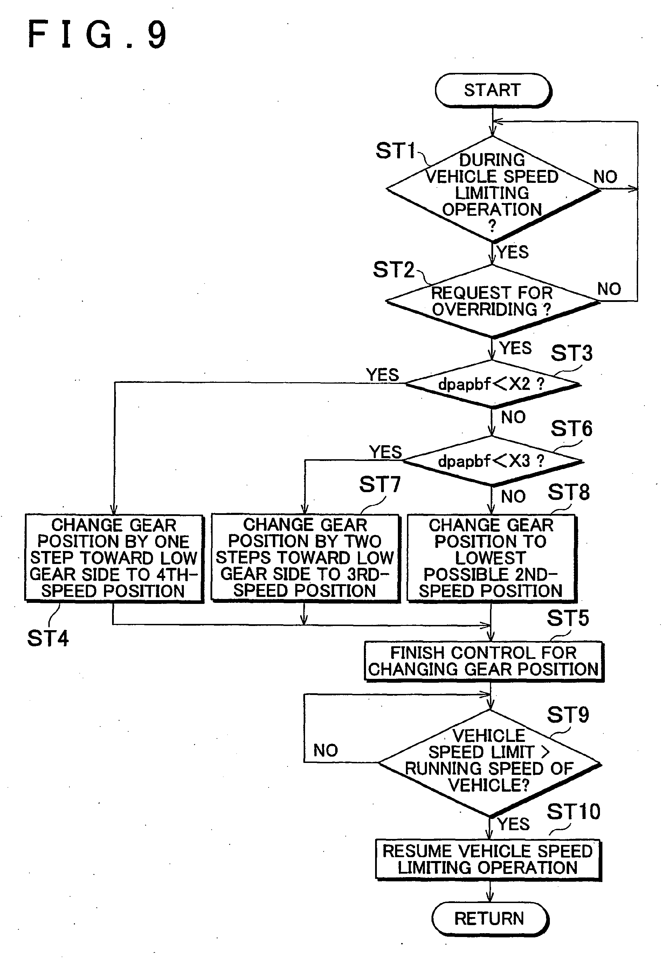

Here, the flow of the shift control of the ECU 100, for changing the gear position of the automatic transmission 3 after cancellation of the vehicle speed limiting operation, will be explained based on the flowchart of FIG. 9.

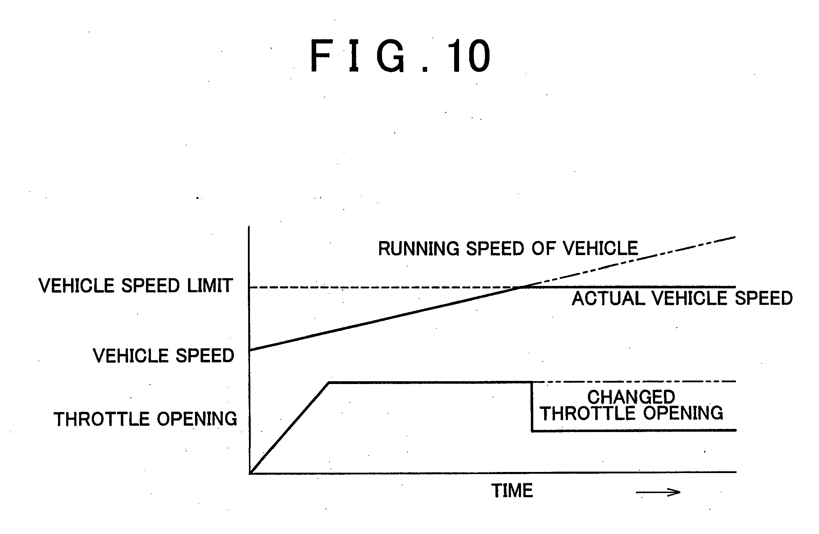

Initially, in step ST1 of the flowchart of FIG. 9, it is determined whether the ECU 100 is in the middle of a vehicle speed limiting operation for limiting the running speed of the vehicle to a certain vehicle speed limit. When the running conditions of the vehicle change while the vehicle is running with the gear position of the automatic transmission 3 being the "5th-speed" position (where the current gear position is equal to the target gear position and the gear position is appropriately established), for example, when the running vehicle speed responsive to the required throttle opening (indicated by a solid line in FIG. 10) determined based on the amount of depression of the accelerator pedal detected by the acceleration stroke sensor 205 becomes higher than the vehicle speed limit (indicated by a dashed line in FIG. 10) to which the vehicle speed is limited according to the actual throttle opening (indicated by the solid line in FIG. 10), the vehicle speed limiting operation is performed to limit the actual throttle opening so as not to exceed a throttle opening limit (indicated by a two-dot chain line in FIG. 10), thereby to limit the running vehicle speed to the vehicle speed limit.

If it is determined in step ST1 that the ECU 100 is in the middle of the vehicle speed limiting operation, it is then determined in step ST2 whether a request for overriding or temporarily cancelling the vehicle speed limiting operation has been made. It is determined that the request for overriding has been made when the rate of change dpapbf of the accelerator pedal travel which is calculated by the accelerator pedal travel change rate calculating means 221 is larger than the first predetermined rate of change X1 stored in the ROM 102 (dpapbf > X1).

If it is determined in step ST2 that the request for overriding has been made (YES in step ST2), it is determined in step ST3 whether the rate of change dpapbf of the accelerator pedal travel immediately before the vehicle speed limiting operation is cancelled is smaller than the second predetermined rate of change X2, namely, whether dpapbf < X2. If it is determined in step ST3 that dpapbf < X2 (YES in step ST3), the ECU 100 proceeds to step ST4 to change the gear position from the 5th-speed gear position at the time of cancellation of the vehicle speed limiting operation, to a gear position (4th-speed gear position) that is lower by one step toward the Low gear side, over the downshifting line "5→4". Namely, when it is determined or found that the rate of change dpapbf of the accelerator pedal travel immediately before the cancellation of the vehicle speed limiting operation is smaller than the second predetermined rate of change X2, the running conditions of the vehicle change over the downshifting line "5→4" from the situation where the vehicle is running with the automatic transmission being in the "5th-speed" gear position, as indicated by an arrow (solid line) in FIG. 5, and the target gear position calculated from the shift map is set to the "4th-speed" position. Then, the ECU 100 generates solenoid control signals (hydraulic command signals) for establishing the "4th-speed" gear position to the automatic transmission 3, so that the gear position is changed from the "5th-speed" gear position to the "4th-speed" gear position that is lower by one step toward the Low gear side. Thereafter, the control for changing the gear position ends in step ST5.

If, on the other hand, it is determined in step ST3 that dpapbf ≥ X2 (NO in step ST3), it is determined in step ST6 whether the rate of change dpapbf of the accelerator pedal travel immediately before cancellation of the vehicle speed limiting operation is smaller than the third predetermined rate of change X3, namely, whether dpapbf < X3. If it is determined in step ST6 that dpapbf < X3 (YES in step ST6), the ECU 100 proceeds to step ST7 to change the gear position from the "5th-speed" gear position at the time of cancellation of the vehicle speed limiting operation to the "3rd-speed" gear position that is lower by two steps than the current position. Namely, if it is determined or found that the rate of change dpapbf of the accelerator pedal travel immediately before cancellation of the vehicle speed limiting operation is equal to or larger than the second predetermined rate of change X2 and is smaller than the third predetermined rate of change X3, the running conditions of the vehicle change from the situation where the vehicle is running with the automatic transmission being in the "5th-speed" gear position, over two downshifting lines "5→4" and "4→3", and the target gear position calculated from the shift map is set to the "3rd-speed" gear position. Then, the ECU 100 generates solenoid control signals (hydraulic command signals) for establishing the "3rd-speed" gear position to the automatic transmission 3, so that the gear position is changed from the "5th-speed" gear position to the "3rd-speed" gear position that is lower by two steps toward the Low gear side (5→3 downshifting). Thereafter, the ECU 100 proceeds to the above-mentioned step ST5.

If it is determined in the above step ST6 that dpapbf ≥ X3 (NO in step ST6), the ECU 100 proceeds to step ST8 to change the gear position from the "5th-speed" gear position at the time of cancellation of the vehicle speed limiting operation, to the "2nd-speed" gear position that is the lowest possible gear position. Namely, if it is found that the rate of change dpapbf of the accelerator pedal travel immediately before the cancellation of the vehicle speed limiting operation is equal to or larger than the third predetermined rate of change X3, the running conditions of the vehicle change over the downshifting lines "5→4", "4→3" and "3→2" from the situation where the vehicle is running with the automatic transmission being in the "5th-speed" gear position, as indicated by an arrow (broken line) in FIG. 5, and the target gear position calculated from the shift map is set to the "2nd-speed" gear position. Then, the ECU 100 generates solenoid control signals (hydraulic command signals) for establishing the "2nd-speed" gear position, to the automatic transmission 3, so that the automatic transmission 3 is shifted down from the "5th-speed" gear position to the "2nd-speed" gear position that is lower by three steps toward the Low gear side (5→2 downshifting). Thereafter, the ECU 100 proceeds to the above-mentioned step ST5.

Subsequently, the ECU 100 waits in step ST9 until the running speed of the vehicle becomes lower than the vehicle speed limit (by, for example, about 5km/h). Then, if it is determined in step ST9 that the running vehicle speed becomes lower than the speed limit, the ECU 100 proceeds to step ST10 to resume the vehicle speed limiting operation, and limit the running speed to the speed limit.

In this case, step ST2 as described above constitutes the vehicle speed limit cancelling means, and step ST3 through step ST8 constitute the gear position changing means as the speed ratio changing means.

As described above, if the rate of change dpapbf of the accelerator pedal travel detected when the accelerator pedal is depressed so as to cancel the vehicle speed limiting operation is larger than the first predetermined rate of change X1 (dpapbf > X1), the vehicle speed limiting operation is temporarily cancelled. When the vehicle speed limiting operation is cancelled, the gear position established at the time of cancellation of the vehicle speed limiting operation is changed according to the rate of change dpapbf of the accelerator pedal travel immediately before the cancellation of the vehicle speed limiting operation. Namely, when the rate of change dpapbf of the accelerator pedal travel immediately before cancellation of the vehicle speed limiting operation is smaller than the second predetermined rate of change X2 (dpapbf < X2), the gear position at the time of cancellation of the vehicle speed limiting operation is changed to a gear position that is lower by one step toward the Low gear side. When the rate of change dpapbf of the accelerator pedal travel immediately before cancellation of the vehicle speed limiting operation is equal to or larger than the second predetermined rate of change X2 and is smaller than the third predetermined rate of change X3 (X2 ≤ dpapbf < X3), the gear position at the time of cancellation of the vehicle speed limiting operation is changed to a gear position that is lower by two steps toward the Low gear side. Furthermore, when the rate of change dpapbf of the accelerator pedal travel immediately before cancellation of the vehicle speed limiting operation is equal to or larger than the third predetermined rate of change X3 (dpapbf ≥ X3), the gear position at the time of cancellation of the vehicle speed limiting operation is changed to the lowest possible gear position toward the Low gear side. Therefore, when the driver requests slow or mild acceleration, a small rate of change dpapbf of the accelerator pedal travel, which reflects the intention of the driver, is smaller than the second predetermined rate of change X2, and therefore, the gear position is changed only by one step toward the Low gear side. When the driver requests rapid or hard acceleration, on the other hand, a large rate of change dpapbf of the accelerator pedal travel, which reflects the intention of the driver, is larger than the third predetermined rate of change X3, and therefore, the gear position is changed to the lowest possible position on the Low gear side. It is thus possible to achieve the acceleration requested by the driver when the vehicle speed limiting operation is cancelled, so that the vehicle may be accelerated according to the intention of the driver.

Since the gear position at the time of cancellation of the vehicle speed limiting operation is changed according to the rate of change dpapbf of the accelerator pedal travel immediately before the cancellation of the vehicle speed limiting operation, the gear position after the cancellation of the vehicle speed limiting operation is determined depending on the manner or degree of depression of the accelerator pedal by the driver. With this arrangement, two or more different control programs for individually determining the gear position after cancellation of the vehicle speed limiting operation need not be prepared with respect to vehicles having mutually different characters or characteristics, for example, vehicles of which slow or mild acceleration is generally required, such as vehicles having high-power engines (prime movers) or family-type vehicles, and vehicles of which rapid or hard acceleration is generally required, such as vehicles having low-power engines or sports-type vehicles, but a single control program is only required to achieve acceleration desired by the driver. Thus, the control program for determining the gear position when the vehicle speed limiting operation is cancelled may be shared among different types of vehicles.

In addition, the vehicle speed limiting operation is cancelled when the rate of change dpapbf of the accelerator pedal travel is larger than the first predetermined rate of change X1, and the gear position is changed according to the rate of change dpapbf of the accelerator pedal travel which is larger than the first predetermined rate X1. With this arrangement, the acceleration requested by the driver when the vehicle speed limiting operation is cancelled may be smoothly obtained or achieved by placing the automatic transmission in the gear position changed according to the rate of change papbf of the accelerator pedal travel which is larger than the first predetermined rate X1, so that the vehicle may be smoothly accelerated according to the intention of the driver.

Furthermore, the change-over switch is provided for switching the mode of changing the gear position when the vehicle speed limiting operation is cancelled, between the first mode as shown in FIG. 6 in which the gear position is changed one step at a time (step by step) based on the first gear-position determining condition set based on the vehicle speed and the accelerator pedal travel, namely, based on each downshifting line (first speed-ratio determining condition) of the shift map shown in FIG. 5, and the second mode as shown in FIG. 7 in which the gear position is changed two or more steps at a time, based on the second gear-position determining condition (second speed-ratio determining condition) different from the first gear-position determining condition, namely, based on the rate of change dpapbf of the accelerator pedal travel. The change-over switch is switched between the two modes according to the character of the vehicle, or the power generated by the engine installed on the vehicle. Thus, when the change-over switch is placed in the first mode using the first gear-position determining condition, the gear position at the time of cancellation of the vehicle speed limiting operation is changed according to the first gear-position determining condition, so that the vehicle may be accelerated at a relatively low rate. When the change-over switch is placed in the second mode using the second gear-position determining condition, the gear position at the time of cancellation of the vehicle speed limiting operation is changed according to the second gear-position determining condition, so as to achieve powerful acceleration different from that achieved when using the first gear-position determining condition. Thus, the vehicle may be accelerated according to the intention of the driver who selected the type of the vehicle.

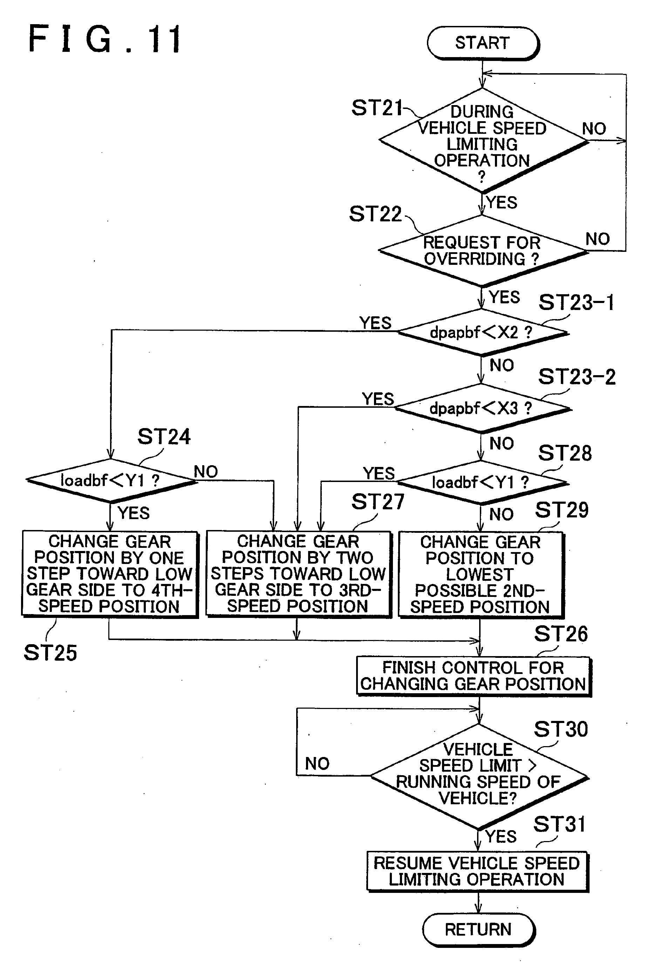

Next, a second embodiment of the invention will be described with reference to FIG. 11.

In the second embodiment, the gear position changing means changes the gear position according to the rate of load of the longitudinal running as another parameter, in addition to the rate of change of the accelerator pedal travel.

In the second embodiment, a first predetermined level (rate) Y1 of load of the longitudinal running is stored in advance in the ROM 102 of the ECU 100.

Then, the gear position changing means changes the gear position at the time of cancellation of the vehicle speed limiting operation, according to the rate of change of the accelerator pedal travel calculated by the accelerator pedal travel change rate calculating means 221 immediately before the vehicle speed limiting operation is cancelled, and the rate of load of the longitudinal running detected by the longitudinal running load sensor 209.

While the gear position is changed from the "5th-speed" gear position at the time of cancellation of the vehicle speed limiting operation to the "4th-speed" gear position that is lower by one step toward the Low gear side when the rate of change dpapbf of the accelerator pedal travel immediately before cancellation of the vehicle speed limiting operation is smaller than the second predetermined rate of change X2 (dpapbf < X2), the gear position changing means of this embodiment corrects the gear position by changing the gear position by a larger degree when the rate of load of the longitudinal running loadbf detected by the longitudinal running load sensor 209 is equal to or larger than the first predetermined level Y1 of load of the longitudinal running stored in the ROM 102 (loadbf ≧ Y1). Namely, the gear position is re-changed largely to the "3rd-speed" gear position that is lower by an additional one step toward the Low gear side. On the other hand, while the gear position is changed from the "5th-speed" gear position at the time of cancellation of the vehicle speed limiting operation to the lowest possible "2nd-speed" gear position when the rate of change dpapbf of the accelerator pedal travel immediately before cancellation of the vehicle speed limiting operation is larger than the second predetermined rate of change X2 and is equal to or larger than the third predetermined rate of change X3 (dpapbf ≥ X3), the gear position changing means corrects the gear position by changing the gear position by a smaller degree when the rate of load of the longitudinal running loadbf detected by the longitudinal running load sensor 209 is smaller than the first predetermined level Y1 of load of the longitudinal running stored in the ROM 102. Namely, the gear position is re-changed from the "2nd-speed" gear position that is lower by three steps toward the Low gear side, to the "3rd-speed" gear position that is higher by one step than the "2nd-speed" gear position toward the High gear side. In sum, the gear position changing means corrects the gear position that is changed by a smaller degree as the rate of change dpapbf of the accelerator pedal travel immediately before cancellation of the vehicle speed limiting operation is smaller, so that the gear position is changed by a larger degree as the rate of load of the longitudinal running loadbf is larger. On the other hand, the gear position changing means corrects the gear position that is changed by a larger degree as the rate of change dpapbf of the accelerator pedal travel immediately before cancellation of the vehicle speed limiting operation is larger, so that the gear position is changed by a smaller degree as the rate of load of the longitudinal running loadbf is smaller.

Here, the flow of shift control of the ECU 100 for changing the gear position of the automatic transmission during a vehicle speed limiting operation will be described with reference to the flowchart of FIG. 11. In this case, too, the flow is assumed to start in a situation where the automatic transmission 3 is placed in the "5th-speed" gear position (the target gear position and the current gear position are equal to each other, and the gear position is appropriately established).

Initially, in step ST21 of the flowchart of FIG. 11, it is determined whether the ECU 100 is in the middle of a vehicle speed limiting operation for limiting the running speed of the vehicle to a certain vehicle speed limit. If it is determined in step ST21 that the ECU 100 is in the middle of the vehicle speed limiting operation, the ECU 100 proceeds to step ST22 to determine whether a request (dpapbf > X1) for overriding or temporarily cancelling the vehicle speed limiting operation has been made.

If it is determined in step ST22 that the request for overriding has been made (YES in ST22), it is determined in step ST23 whether the rate of change dpapbf of the accelerator pedal travel immediately before cancellation of the vehicle speed limiting operation is smaller than the second predetermined rate of change X2 and the third predetermined rate of change X3, namely, whether dpapbf < X2 and dpapbf < X3. If it is determined in step ST23-1 that dpapbf < X2 (YES in step ST23-1), it is determined in step ST24 whether the rate of load of the longitudinal running loadbf detected by the longitudinal running load sensor 209 is smaller than the first predetermined level Y1 of load of the longitudinal running stored in the ROM 102, namely, whether loadbf < Y1.

If it is determined in step ST24 that loadbf < Y1 (YES in ST24), the gear position is changed from the "5th-speed" gear position at the time of cancellation of the vehicle speed limiting operation to the "4th-speed" gear position that is lower by one step toward the Low gear side in step ST25. Namely, the gear position that is changed from the "5th-speed" gear position to the "4th-speed" gear position when the rate of change dpapbf of the accelerator pedal travel immediately before cancellation of the vehicle speed limiting operation is smaller than the second predetermined rate of change X2 (dpapbf < X2) is not re-changed or corrected according to the rate of load of the longitudinal running loadbf, but is set to the "4th-speed" gear position that is lower by one step toward the Low gear side according to the rate of change dpapbf of the accelerator pedal travel which is smaller than the second predetermined rate of change X2. Thereafter, the control for changing the gear position ends in step ST26.

If it is determined in step ST24 that loadbf ≥ Y1 (NO in step ST24), the gear position is changed in step ST27 from the "5th-speed" gear position at the time of cancellation of the vehicle speed limiting operation to the "3rd-speed" gear position that is lower by two steps toward the Low gear side, according to the rate of load of the longitudinal running loadbf that is equal to or larger than the first predetermined level Y1. While the gear position is normally changed from the "5th-speed" gear position to the "4th-speed" gear position that is lower by one step toward the Low gear side when the rate of change dpapbf of the accelerator pedal travel immediately before cancellation of the vehicle speed limiting operation is smaller than the second predetermined rate of change X2 (dpapbf < X2), the gear position is re-changed by a larger degree into the "3rd-speed" gear position that is lower by an additional one step than the above "4th-speed" gear position toward the Low gear side, according to the rate of load of the longitudinal running loadbf that is equal to or larger than the first predetermined level Y1. Namely, the gear position is corrected so that the degree of downshifting is increased. Then, the ECU 100 proceeds to the above-mentioned step ST26.

If, on the other hand, it is determined in step ST23 that the rate of change dpapbf of the accelerator pedal travel immediately before cancellation of the vehicle speed limiting operation is larger than the second predetermined rate of change X2 and is equal to or larger than the third predetermined rate of change X3 (dpapbf ≥ X3) (NO in step ST23), it is determined in step ST28 whether loadbf < Y1.

If it is determined in step ST28 that loadbf < Y1 (YES in step ST28), the gear position is changed in step ST27 from the "5th-speed" gear position at the time of cancellation of the vehicle speed limiting operation to the "3rd-speed" gear position that is lower by two steps toward the Low gear side. While the gear position is normally changed from the "5th-speed" gear position to the lowest possible "2nd-speed" gear position toward the Low gear side when the rate of change dpapbf of the accelerator pedal travel immediately before cancellation of the vehicle speed limiting operation is equal to or larger than the third predetermined rate of change X3 (dpapbf ≥ X3), the gear position is re-changed by a smaller degree into the "3rd-speed" gear position that is higher by one step than the above "2nd-speed" gear position toward the High gear side, according to the rate of load of the longitudinal running loadbf that is smaller than the first predetermined level Y1. Namely, the gear position is corrected so that the degree of downshifting is reduced. Then, the ECU 100 proceeds to the above-mentioned step ST26.

If it is determined in step ST28 that "loadbf ≥ Y1" (NO in step ST28), the gear position is changed in step ST29 from the "5th-speed" gear position at the time of cancellation of the vehicle speed limiting operation to the lowest possible "2nd-speed" gear position, according to the rate of change dpapbf of the accelerator pedal travel immediately before cancellation of the vehicle speed limit operation which is equal to or larger than the third predetermined rate of change X3 (dpapbf ≥ X3), without being re-changed or corrected according to the rate of load of the longitudinal running loadbf. Then, the ECU 100 proceeds to the above-mentioned step ST26.

After execution of step ST26, step ST30 is executed to wait until the running speed of the vehicle becomes smaller than the speed limit (by, for example, about 5 km/h). Then, in step ST31, the ECU 100 resumes the vehicle speed limiting operation to limit the running vehicle speed to the speed limit.

In this case, step ST22 as described above constitutes the speed limit cancelling means, and step ST23 through step ST29 constitute the gear position changing means as the speed ratio changing means.

As described above, when the driver requests slow or mild acceleration, the gear position is changed from the "5th-speed" gear position at the time of cancellation of the vehicle speed limiting operation to the "4th-speed" gear position that is lower by one step toward the Low gear side, according to the rate of change dpapbf of the accelerator pedal travel which is smaller than the second predetermined rate of change X2, so that the vehicle is accelerated according to the intention of the driver. However, if the longitudinal running speed loadbf is larger than the first predetermined level Y1, the gear position is re-changed by a larger degree to the "3rd-speed" gear position that is lower by an additional one step toward the Low gear side, according to the large longitudinal running load loadbf. When the driver requests rapid or hard acceleration, on the other hand, the gear position is largely changed from the "5th-speed" gear position at the time of cancellation of the vehicle speed limiting operation to the lowest possible "2nd-speed" gear position, according to the rate of change dpapbf of the accelerator pedal travel which is equal to or larger than the third predetermined rate of change X3, so that the vehicle is accelerated according to the intention of the driver. However, if the rate of load of the longitudinal running loadbf is smaller than the first predetermined value Y1, the gear position is re-changed by a smaller degree to the "3rd-speed" gear position that is higher by one step than the above "2nd-speed" gear position toward High gear side, according to the small longitudinal running load loadbf. In this manner, the acceleration requested by the driver when the vehicle speed limiting operation is cancelled is appropriately achieved in accordance with the rate of load of the longitudinal running loadbf applied to the vehicle, as well as the rate of change dpapbf of the accelerator pedal travel. In other words, the vehicle may be accelerated according to the intention of the driver, in view of the rate of load of the longitudinal running loadbf.

It is to be understood that the invention is not limited to the illustrated embodiments, but covers various other embodiments and modified examples. In the first embodiment, the gear position at the time of cancellation of the vehicle speed limiting operation is changed by a smaller degree as the rate of change dpapbf of the accelerator pedal travel immediately before cancellation of the vehicle speed limiting operation is smaller, and is changed by a larger degree as the rate of change dpapbf of the accelerator pedal travel immediately before cancellation of the vehicle speed limiting operation is larger. However, the gear position changing means may change the gear position at the time of cancellation of the vehicle speed limiting operation by a larger degree as the rate of load of the longitudinal running detected by the longitudinal running load detecting means immediately before cancellation of the vehicle speed limiting operation is larger, and may change the gear position by a smaller degree as the rate of load of the longitudinal running detected by the longitudinal running load detecting means immediately before cancellation of the vehicle speed limiting operation is smaller. More specifically, the gear position changing means may change the gear position at the time of cancellation of the vehicle speed limiting operation to a gear position that is lower by one step toward the Low gear side when the rate of load of the longitudinal running loadbf immediately before cancellation of the vehicle speed limiting operation is smaller than a first predetermined level Y1 (loadbf < Y1), and may change the gear position to a gear position that is lower by two steps toward the Low gear side when the rate of load of the longitudinal running loadbf immediately before cancellation of the vehicle speed limiting operation is equal to or larger than the first predetermined level Y1 and smaller than a second predetermined level Y2 (Y1 ≤ loadbf < Y2). Furthermore, the gear position changing means may change the gear position at the time of cancellation of the vehicle speed limiting operation to the lowest possible gear position toward the Low gear side when the rate of load of the longitudinal running loadbf immediately before cancellation of the vehicle speed limiting operation is equal to or larger than the second predetermined level Y2 (loadbf ≥ Y2). In this case, the acceleration requested by the driver when the vehicle speed limiting operation is cancelled is appropriately achieved in accordance with the rate of load of the longitudinal running loadbf, and the vehicle may be accelerated according to the intention of the driver.

On the other hand, the gear position changing means may change the gear position at the time of cancellation of the vehicle speed limiting operation by a larger degree as the rate of the steering angle or the rate of the lateral acceleration applied to the vehicle in the lateral direction, which is detected by the lateral load sensor immediately before the vehicle speed limiting operation is cancelled, is smaller, and may change the gear position by a smaller degree as the rate of the steering angle or rate of lateral acceleration detected by the lateral load detecting means immediately before the vehicle speed limiting operation is cancelled is larger. More specifically, the rate of the steering angle or rate of lateral acceleration detected by the lateral load sensor immediately before the vehicle speed limiting operation is cancelled is compared with a first predetermined value or a second predetermined value that is larger than the first predetermined value, and the gear position changing means may change the gear position at the time of cancellation of the vehicle speed limiting operation to a gear position that is lower by one step toward the Low gear side when the rate of the steering angle or rate of lateral acceleration detected immediately before the cancellation of the vehicle speed limiting operation is larger than the second predetermined value. The gear position changing means may also change the gear position at the time of cancellation of the vehicle speed limiting operation to a gear position that is lower by two steps toward the Low gear side when the rate of steering angel or rate of lateral acceleration detected immediately before the cancellation of the vehicle speed limiting operation is smaller than the second predetermined value and is larger than the first predetermined value. Furthermore, the gear position changing means may change the gear position at the time of cancellation of the vehicle speed limiting operation to the lowest possible gear position toward the Low gear side when the rate of the steering angle or rate of lateral acceleration detected immediately before the cancellation of the vehicle speed limiting operation is smaller than the first predetermined value. In this case, the acceleration requested by the driver when the vehicle speed limiting operation is cancelled is appropriately achieved in accordance with the rate of the steering angle or the rate of the lateral acceleration, and the vehicle may be accelerated according to the intention of the driver.

While the gear position changing means changes the gear position based on the rate of load of the longitudinal running loadbf in addition to the rate of change dpapbf of the accelerator pedal travel in the second embodiment as described above, the gear position changing means may change the gear position based on the rate of the steering angle or rate of lateral acceleration detected immediately before the vehicle speed limiting operation is cancelled, in addition to the rate of change of the accelerator pedal travel.

While the automatic transmission 3 is in the form of a planetary gear mechanism having a plurality of gear positions corresponding to a plurality of speed ratios in each of the illustrated embodiments, the automatic transmission may be in the form of another type of gear mechanism having a plurality of gear positions, or a belt-and-pulley type or toroidal type continuously variable transmission. In the case where the automatic transmission is a belt-and-pulley type continuously variable transmission having a belt looped over a pair of pulleys (not shown), the speed ratio is continuously changed by changing the effective diameters of the pulleys via hydraulic pressures, thereby to achieve stepless or continuous shifting of the transmission.

While the automatic transmission 3 may be shifted among five-speeds gear positions in each of the illustrated embodiment, the invention is not limited to the transmission that may be shifted among the five-speeds gear positions, but may be applied to automatic transmissions that may be shifted among three-speeds or more gear positions other than the five-speeds gear positions.

While the vehicle speed limiting operation is cancelled when the rate of change dpapbf of the accelerator pedal travel calculated by the accelerator pedal travel change rate calculating means 221 is larger than the first predetermined rate of change X1 stored in the ROM 102 (dpapbf > X1) in each of the illustrated embodiments, the vehicle speed limiting operation may be cancelled by means of a manual switch provided at around the dashboard of the driver's seat, or a kick-down switch.

While the first gear-position determining condition is set based on the vehicle speed and the accelerator pedal travel in each of the illustrated embodiments, the first gear-position determining condition (or the first speed-ratio determining condition) may be set based on the vehicle speed, and a difference between the rotational speed of the prime mover of the vehicle and the turbine speed of the torque converter.

While the invention has been described with reference to example embodiments thereof, it should be understood that the invention is not limited to the example embodiments or constructions. To the contrary, the invention is intended to cover various modifications and equivalent arrangements.
A vehicle speed limiting system changes a gear position of an automatic transmission when a vehicle speed limiting operation is cancelled, to a gear position that is lower by one step toward the Low gear side, when the rate of change (dpapbf) of the accelerator pedal travel immediately before cancellation of the vehicle speed limiting operation is smaller than a second predetermined rate of change (X2), and changes the gear position to a gear position that is lower by two steps toward the Low gear side when the rate of change (dpapbf) is equal to or larger than the rate of change (X2) and smaller than a third predetermined rate of change (X3). Further, the system changes the gear position to the lowest possible gear position toward the Low gear side when the rate of change (dpapbf) is equal to or larger than the rate of change (X3).

## Claims

1. A vehicle speed limiting system that performs a vehicle speed limiting operation to limit a running vehicle speed to a vehicle speed limit that has been set, when the running vehicle speed becomes higher than the vehicle speed limit, including:
shift control means for setting a speed ratio of an automatic transmission based on the running vehicle speed that varies with a throttle opening, wherein the running vehicle speed is set in accordance with a required throttle opening determined based on an accelerator pedal travel, while the vehicle speed limit is set in accordance with a throttle opening limit to which the throttle opening is limited,
vehicle speed limit cancelling means for cancelling the vehicle speed limiting operation, and
accelerator pedal travel detecting means for detecting the accelerator pedal travel representing an amount of depression of an accelerator pedal, **characterized by** comprising:
accelerator pedal travel change rate calculating means for calculating a rate of change of the accelerator pedal travel from the accelerator pedal travel detected by the accelerator pedal travel detecting means; and
speed ratio changing means for changing the speed ratio of the automatic transmission when the vehicle speed limiting operation is cancelled, according to the rate of change of the accelerator pedal travel obtained immediately before cancellation of the vehicle speed limiting operation.

2. The vehicle speed limiting system according to claim 1, wherein the vehicle speed limit cancelling means cancels the vehicle speed limiting operation when the rate of change of the accelerator pedal travel is equal to or larger than a predetermined rate of change.

3. The vehicle speed limiting system according to claim 1 or claim 2, wherein the speed ratio changing means changes the speed ratio at the time of cancellation of the vehicle speed limiting operation by a smaller degree as the rate of change of the accelerator pedal travel immediately before cancellation of the vehicle speed limiting operation is smaller, and changes the speed ratio by a larger degree as the rate of change of the accelerator pedal travel immediately before cancellation of the vehicle speed limiting operation is larger.

4. The vehicle speed limiting system according to claim 3, wherein the speed ratio changing means changes the speed ratio at the time of cancellation of the vehicle speed limiting operation such that a degree of downshifting of the automatic transmission decreases as the rate of change of the accelerator pedal travel immediately before cancellation of the vehicle speed limiting operation is smaller, and such that the degree of downshifting increases as the rate of change of the accelerator pedal travel immediately before cancellation of the vehicle speed limiting operation is larger.

5. A vehicle speed limiting system that performs a vehicle speed limiting operation to limit a running vehicle speed to a vehicle speed limit that has been set, when the running vehicle speed becomes higher than the vehicle speed limit, including:
shift control means for setting a speed ratio of an automatic transmission, and
vehicle speed limit cancelling means for cancelling the vehicle speed limiting operation, **characterized by** comprising:
longitudinal running load detecting means for detecting a rate of load of a longitudinal running applied to the vehicle in a longitudinal direction as a running direction of the vehicle; and
speed ratio changing means for changing the speed ratio of the automatic transmission when the vehicle speed limiting operation is cancelled, according to the rate of load of the longitudinal running detected immediately before the vehicle speed limiting operation is cancelled.

6. The vehicle speed limiting system according to claim 5, wherein the running vehicle speed is set in accordance with a required throttle opening determined based on an accelerator pedal travel, while the vehicle speed limit is set in accordance with a throttle opening limit to which the throttle opening is limited, and the shift control means sets the speed ratio of the automatic transmission based on the running vehicle speed that varies with the throttle opening.

7. The vehicle speed limiting system according to claim 5 or claim 6, wherein the speed ratio changing means changes the speed ratio at the time of cancellation of the vehicle speed limiting operation by a larger degree as the rate of load of the longitudinal running detected immediately before cancellation of the vehicle speed limiting operation is larger, and changes the speed ratio by a smaller degree as the rate of load of the longitudinal running detected immediately before cancellation of the vehicle speed limiting operation is smaller.

8. The vehicle speed limiting system according to claim 7, wherein the speed ratio changing means changes the speed ratio at the time of cancellation of the vehicle speed limiting operation such that a degree of downshifting of the automatic transmission increases as the rate of load of the longitudinal running detected immediately before cancellation of the vehicle speed limiting operation is larger, and such that the degree of downshifting decreases as the rate of load of the longitudinal running detected immediately before cancellation of the vehicle speed limiting operation is smaller.

9. A vehicle speed limiting system that performs a vehicle speed limiting operation to limit a running vehicle speed to a vehicle speed limit that has been set, when the running vehicle speed becomes higher than the vehicle speed limit, including:
shift control means for setting a speed ratio of an automatic transmission, and
vehicle speed limit cancelling means for cancelling the vehicle speed limiting operation, **characterized by** comprising:
lateral load detecting means for detecting at least one of a rate of a steering angle and a rate of a lateral acceleration applied to the vehicle in a lateral direction perpendicular to a running direction of the vehicle; and
speed ratio changing means for changing the speed ratio of the automatic transmission when the vehicle speed limiting operation is cancelled, according to said at least one of the rate of the steering angle detected immediately before cancellation of the vehicle speed limiting operation and the rate of the lateral acceleration detected immediately before cancellation of the vehicle speed limiting operation.

10. The vehicle speed limiting system according to claim 9, wherein the running vehicle speed is set in accordance with a required throttle opening determined based on an accelerator pedal travel, while the vehicle speed limit is set in accordance with a throttle opening limit to which the throttle opening is limited, and the shift control means sets the speed ratio of the automatic transmission based on the running vehicle speed that varies with the throttle opening.

11. The vehicle speed limiting system according to claim 9 or claim 10, wherein the speed ratio changing means changes the speed ratio at the time of cancellation of the vehicle speed limiting operation by a larger degree as said at least one of the rate of the steering angle detected immediately before cancellation of the vehicle speed limiting operation and the rate of the lateral acceleration detected immediately before cancellation of the vehicle speed limiting operation is smaller, and changes the speed ratio by a smaller degree as said at least one of t the rate of the steering angle detected immediately before cancellation of the vehicle speed limiting operation and the rate of the lateral acceleration detected immediately before cancellation of the vehicle speed limiting operation is larger.

12. The vehicle speed limiting system according to claim 11, wherein the speed ratio changing means changes the speed ratio at the time of cancellation of the vehicle speed limiting operation such that a degree of downshifting of the automatic transmission increases as said at least one of the rate of the steering angle detected immediately before cancellation of the vehicle speed limiting operation and the rate of the lateral acceleration detected immediately before cancellation of the vehicle speed limiting operation is smaller, and such that the degree of downshifting decreases as said at least one of the rate of the steering angle detected immediately before cancellation of the vehicle speed limiting operation and the rate of the lateral acceleration detected immediately before cancellation of the vehicle speed limiting operation is larger.

13. The vehicle speed limiting system according to claim 1 or claim 2, **characterized by** further comprising longitudinal running load detecting means for detecting a rate of load of a longitudinal running applied to the vehicle in a longitudinal direction as a running direction of the vehicle,
wherein the speed ratio changing means changes the speed ratio at the time of cancellation of the vehicle speed limiting operation, according to both of the rate of change of the accelerator pedal travel obtained and the rate of load of the longitudinal running detected immediately before cancellation of the vehicle speed limiting operation.

14. The vehicle speed limiting system according to claim 13, wherein the speed ratio changing means corrects the speed ratio that is changed by a smaller degree as the rate of change of the accelerator pedal travel is smaller, by changing the speed ratio by a larger degree as the rate of detected load of the longitudinal running is larger, and corrects the speed ratio that is changed by a larger degree as the rate of change of the accelerator pedal travel is larger, by changing the speed ratio by a smaller degree as the rate of detected load of the longitudinal running is smaller.

15. The vehicle speed limiting system according to claim 1 or claim 2, **characterized by** further comprising lateral load detecting means for detecting at least one of a rate of a steering angle and a rate of a lateral acceleration applied to the vehicle in a lateral direction perpendicular to a running direction of the vehicle, wherein the speed ratio changing means changes the speed ratio at the time of cancellation of the vehicle speed limiting operation, according to both of the rate of change of the accelerator pedal travel obtained immediately before cancellation of the vehicle speed limiting operation and said at least one of the rate of the steering angle detected immediately before cancellation of the vehicle speed limiting operation and the rate of the lateral acceleration detected immediately before cancellation of the vehicle speed limiting operation.

16. The vehicle speed limiting system according to claim 15, wherein the speed ratio changing means corrects the speed ratio that is changed by a smaller degree as the rate of change of the accelerator pedal travel is smaller, by changing the speed ratio by a larger degree as said at least one of the rate of the steering angle and the rate of the lateral acceleration is smaller, and corrects the speed ratio that is changed by a larger degree as the rate of change of the accelerator pedal travel is larger, by changing the speed ratio by a smaller degree as said at least one of the rate of the steering angle and the rate of the lateral acceleration is larger.

17. The vehicle speed limiting system according to any one of claims 1 to 16, wherein:
the speed ratio changing means includes a change-over switch that switches a mode of changing the speed ratio when the vehicle speed limiting operation is cancelled, between a first mode in which the speed ratio is changed based on a first speed-ratio determining condition set based on the vehicle speed and at least one of the accelerator pedal travel and a difference rotational between a rotational speed of a prime mover of the vehicle and a turbine speed of a torque converter, and a second mode in which the speed ratio is changed based on a second speed-ratio determining condition different from the first speed-ratio determining condition,
the change-over switch being adapted to be switched depending on at least one of a character of the vehicle and a power generated by the prime mover of the vehicle.

18. The vehicle speed limiting system according to claim 17, wherein switching of the change-over switch depending on the character of the vehicle is performed depending on whether the vehicle has a high-power engine or a low-power engine, and whether the vehicle requires mild acceleration or powerful acceleration.

## Patentansprüche

1. System zum Begrenzen einer Fahrzeuggeschwindigkeit, das einen Fahrzeuggeschwindigkeitsbegrenzungsbetrieb zum Begrenzen einer Fahrzeugbetriebsgeschwindigkeit auf eine festgelegte Fahrzeuggeschwindigkeitsgrenze ausführt, wenn die Fahrzeugbetriebsgeschwindigkeit höher als die Fahrzeuggeschwindigkeitsgrenze wird, wobei das System Folgendes aufweist:
eine Schaltsteuerungseinrichtung zum Festlegen eines Übersetzungsverhältnisses eines Automatikgetriebes auf der Grundlage der Fahrzeugbetriebsgeschwindigkeit, die sich mit einer Drosselklappenöffnung ändert, wobei die Fahrzeugbetriebsgeschwindigkeit in Übereinstimmung mit einer angeforderten Drosselklappenöffnung festgelegt ist, die auf der Grundlage eines Beschleunigerpedalwegs bestimmt wird, während die Fahrzeuggeschwindigkeitsgrenze in Übereinstimmung mit einer Drosselklappenöffnungsgrenze festgelegt ist, auf die die Drosselklappenöffnung begrenzt ist,
eine Fahrzeuggeschwindigkeitsgrenzenaufhebungseinrichtung zum Aufheben des Fahrzeuggeschwindigkeitsbegrenzungsbetriebs, und
eine Beschleunigerpedalwegerfassungseinrichtung zum Erfassen des Beschleunigerpedalwegs, der ein Ausmaß einer Betätigung eines Beschleunigerpedals darstellt,
**gekennzeichnet durch**
eine Beschleunigerpedalwegänderungsratenberechnungseinrichtung zum Berechnen einer Änderungsrate eines Beschleunigerpedalwegs von dem Beschleunigerpedalweg, der durch die Beschleunigerpedalwegerfassungseinrichtung erfasst wird; und
eine Übersetzungsverhältnisänderungseinrichtung zum Ändern des Übersetzungsverhältnisses des Automatikgetriebes, wenn der Fahrzeuggeschwindigkeitsbegrenzungsbetrieb aufgehoben wird, gemäß der Änderungsrate des Beschleunigerpedalwegs, der unmittelbar vor der Aufhebung des Fahrzeuggeschwindigkeitsbegrenzungsbetriebs erhalten wird.

2. System zum Begrenzen einer Fahrzeuggeschwindigkeit nach Anspruch 1, wobei die Fahrzeuggeschwindigkeitsgrenzenaufhebungseinrichtung den Fahrzeuggeschwindigkeitsbegrenzungsbetrieb aufhebt, wenn die Änderungsrate des Beschleunigerpedalwegs gleich wie oder größer als eine vorbestimmte Änderungsrate ist.

3. System zum Begrenzen einer Fahrzeuggeschwindigkeit nach Anspruch 1 oder Anspruch 2, wobei die Übersetzungsverhältnisänderungseinrichtung das Übersetzungsverhältnis zu der Zeit der Aufhebung des Fahrzeuggeschwindigkeitsbegrenzungsbetriebs um einen kleineren Grad ändert, wenn die Änderungsrate des Beschleunigerpedalwegs unmittelbar vor der Aufhebung des Fahrzeuggeschwindigkeitsbegrenzungsbetriebs kleiner ist, und das Übersetzungsverhältnis um einen größeren Grad ändert, wenn die Änderungsrate des Beschleunigerpedalwegs unmittelbar vor der Aufhebung des Fahrzeuggeschwindigkeitsbegrenzungsbetriebs größer ist.

4. System zum Begrenzen einer Fahrzeuggeschwindigkeit nach Anspruch 3, wobei die Übersetzungsverhältnisänderungseinrichtung das Übersetzungsverhältnis zu der Zeit der Aufhebung des Fahrzeuggeschwindigkeitsbegrenzungsbetriebs derart ändert, dass sich ein Grad zum Herunterschalten des Automatikgetriebes verringert, wenn die Änderungsrate des Beschleunigerpedalwegs unmittelbar vor der Aufhebung des Fahrzeuggeschwindigkeitsbegrenzungsbetriebs kleiner ist, und derart ändert, dass sich der Grad zum Herunterschalten erhöht, wenn die Änderungsrate des Beschleunigerpedalwegs unmittelbar vor der Aufhebung des Fahrzeuggeschwindigkeitsbegrenzungsbetriebs größer ist.

5. System zum Begrenzen einer Fahrzeuggeschwindigkeit, das einen Fahrzeuggeschwindigkeitsbegrenzungsbetrieb zum Begrenzen einer Fahrzeugbetriebsgeschwindigkeit auf eine festgelegte Fahrzeuggeschwindigkeitsgrenze ausführt, wenn die Fahrzeugbetriebsgeschwindigkeit höher als die Fahrzeuggeschwindigkeitsgrenze wird, wobei das System Folgendes aufweist:
eine Schaltsteuerungseinrichtung zum Festlegen eines Übersetzungsverhältnisses eines Automatikgetriebes, und
eine Fahrzeuggeschwindigkeitsgrenzenaufhebungseinrichtung zum Aufheben des Fahrzeuggeschwindigkeitsbegrenzungsbetriebs,
**gekennzeichnet durch**
eine Längsfahrtlasterfassungseinrichtung zum Erfassen einer Längsfahrtlastrate, die auf das Fahrzeug in eine Längsrichtung als eine Fahrtrichtung des Fahrzeugs aufgebracht wird; und
eine Übersetzungsverhältnisänderungseinrichtung zum Ändern des Übersetzungsverhältnisses des Automatikgetriebes, wenn der Fahrzeuggeschwindigkeitsbegrenzungsbetrieb aufgehoben wird, gemäß der Längsfahrtlastrate, die erfasst wird, unmittelbar bevor der Fahrzeuggeschwindigkeitsbegrenzungsbetrieb aufgehoben wird.

6. System zum Begrenzen einer Fahrzeuggeschwindigkeit nach Anspruch 5, wobei die Fahrzeugbetriebsgeschwindigkeit in Übereinstimmung mit einer angeforderten Drosselklappenöffnung festgelegt wird, die auf der Grundlage eines Beschleunigerpedalwegs bestimmt ist, während die Fahrzeuggeschwindigkeitsgrenze in Übereinstimmung mit einer Drosselklappenöffnungsgrenze festgelegt wird, auf die die Drosselklappenöffnung begrenzt ist, und die Schaltsteuerungseinrichtung das Übersetzungsverhältnis des Automatikgetriebes auf der Grundlage der Fahrzeugbetriebsgeschwindigkeit festlegt, die sich mit der Drosselklappenöffnung ändert.

7. System zum Begrenzen einer Fahrzeuggeschwindigkeit nach Anspruch 5 oder 6, wobei die Übersetzungsverhältnisänderungseinrichtung das Übersetzungsverhältnis zu der Zeit der Aufhebung des Fahrzeuggeschwindigkeitsbegrenzungsbetriebs um einen größeren Grad ändert, wenn die Längsfahrtlastrate, die unmittelbar vor der Aufhebung des Fahrzeuggeschwindigkeitsbegrenzungsbetriebs erfasst wird, größer ist, und das Übersetzungsverhältnis um einen kleineren Grad ändert, wenn die Längsfahrtlastrate, die unmittelbar vor der Aufhebung des Fahrzeuggeschwindigkeitsbegrenzungsbetriebs erfasst wird, kleiner ist.

8. System zum Begrenzen einer Fahrzeuggeschwindigkeit nach Anspruch 7, wobei die Übersetzungsverhältnisänderungseinrichtung das Übersetzungsverhältnis zu der Zeit der Aufhebung des Fahrzeuggeschwindigkeitsbegrenzungsbetriebs derart ändert, dass sich ein Grad zum Herunterschalten des Automatikgetriebes erhöht, wenn die Längsfahrtlastrate, die unmittelbar vor der Aufhebung des Fahrzeuggeschwindigkeitsbegrenzungsbetriebs erfasst wird, größer ist, und derart ändert, dass sich der Grad zum Herunterschalten verringert, wenn die Längsfahrtlastrate, die unmittelbar vor der Aufhebung des Fahrzeuggeschwindigkeitsbegrenzungsbetriebs erfasst wird, kleiner ist.

9. System zum Begrenzen einer Fahrzeuggeschwindigkeit, das einen Fahrzeuggeschwindigkeitsbegrenzungsbetrieb zum Begrenzen einer Fahrzeugbetriebsgeschwindigkeit auf eine festgelegte Fahrzeuggeschwindigkeitsgrenze ausführt, wenn die Fahrzeugbetriebsgeschwindigkeit höher als die Fahrzeuggeschwindigkeitsgrenze wird, wobei das System Folgendes aufweist:
eine Schaltsteuerungseinrichtung zum Festlegen eines Übersetzungsverhältnisses eines Automatikgetriebes, und
eine Fahrzeuggeschwindigkeitsgrenzenaufhebungseinrichtung zum Aufheben des Fahrzeuggeschwindigkeitsbegrenzungsbetriebs,
**gekennzeichnet durch**
eine Querlasterfassungseinrichtung zum Erfassen zumindest einer Rate eines Lenkwinkels und einer Rate einer Querbeschleunigung, die auf das Fahrzeug in einer Querrichtung senkrecht zu einer Fahrtrichtung des Fahrzeugs aufgebracht wird; und
eine Übersetzungsverhältnisänderungseinrichtung zum Ändern des Übersetzungsverhältnisses des Automatikgetriebes, wenn der Fahrzeuggeschwindigkeitsbegrenzungsbetrieb aufgehoben wird, gemäß der zumindest einen Rate von der Rate des Lenkwinkels, die unmittelbar vor der Aufhebung des Fahrzeuggeschwindigkeitsbegrenzungsbetriebs erfasst wird, und der Rate der Querbeschleunigung, die unmittelbar vor der Aufhebung des Fahrzeuggeschwindigkeitsbegrenzungsbetriebs erfasst wird.

10. System zum Begrenzen einer Fahrzeuggeschwindigkeit nach Anspruch 9, wobei die Fahrzeugbetriebsgeschwindigkeit in Übereinstimmung mit einer angeforderten Drosselklappenöffnung festgelegt wird, die auf der Grundlage eines Beschleunigerpedalwegs bestimmt ist, während die Fahrzeuggeschwindigkeitsgrenze in Übereinstimmung mit einer Drosselklappenöffnungsgrenze festgelegt wird, auf die die Drosselklappenöffnung begrenzt ist, und die Schaltsteuerungseinrichtung das Übersetzungsverhältnis des Automatikgetriebes auf der Grundlage der Fahrzeugbetriebsgeschwindigkeit festlegt, die sich mit der Drosselklappenöffnung ändert.

11. System zum Begrenzen einer Fahrzeuggeschwindigkeit nach Anspruch 9 oder Anspruch 10, wobei die Übersetzungsverhältnisänderungseinrichtung das Übersetzungsverhältnis zu der Zeit der Aufhebung des Fahrzeuggeschwindigkeitsbegrenzungsbetriebs um einen größeren Grad ändert, wenn die zumindest eine Rate von der Rate des Lenkwinkels, die unmittelbar vor der Aufhebung des Fahrzeuggeschwindigkeitsbegrenzungsbetriebs erfasst wird, und der Rate der Querbeschleunigung, die unmittelbar vor der Aufhebung des Fahrzeuggeschwindigkeitsbegrenzungsbetriebs erfasst wird, kleiner ist, und das Übersetzungsverhältnis um einen kleineren Grad ändert, wenn die zumindest eine Rate von der Rate des Lenkwinkels, die unmittelbar vor der Aufhebung des Fahrzeuggeschwindigkeitsbegrenzungsbetriebs erfasst wird, und der Rate der Querbeschleunigung, die unmittelbar vor der Aufhebung des Fahrzeuggeschwindigkeitsbegrenzungsbetriebs erfasst wird, größer ist.

12. System zum Begrenzen einer Fahrzeuggeschwindigkeit nach Anspruch 11, wobei die Übersetzungsverhältnisänderungseinrichtung das Übersetzungsverhältnis zu der Zeit der Aufhebung des Fahrzeuggeschwindigkeitsbegrenzungsbetriebs derart ändert, dass sich ein Grad zum Herunterschalten des Automatikgetriebes erhöht, wenn die zumindest eine Rate von der Rate des Lenkwinkels, die unmittelbar vor der Aufhebung des Fahrzeuggeschwindigkeitsbegrenzungsbetriebs erfasst wird, und der Rate der Querbeschleunigung, die unmittelbar vor der Aufhebung des Fahrzeuggeschwindigkeitsbegrenzungsbetriebs erfasst wird, kleiner ist, und derart ändert, dass sich der Grad zum Herunterschalten verringert, wenn die zumindest eine Rate von der Rate des Lenkwinkels, die unmittelbar vor der Aufhebung des Fahrzeuggeschwindigkeitsbegrenzungsbetriebs erfasst wird, und der Rate der Querbeschleunigung, die unmittelbar vor der Aufhebung des Fahrzeuggeschwindigkeitsbegrenzungsbetriebs erfasst wird, größer ist.

13. System zum Begrenzen einer Fahrzeuggeschwindigkeit nach Anspruch 1 oder Anspruch 2, **dadurch gekennzeichnet, dass** es des Weiteren eine Längsfahrtlasterfassungseinrichtung zum Erfassen einer Längsfahrtlastrate aufweist, die auf das Fahrzeug in eine Längsrichtung als eine Fahrtrichtung des Fahrzeugs aufgebracht wird,
wobei die Übersetzungsverhältnisänderungseinrichtung das Übersetzungsverhältnis zu der Zeit der Aufhebung des Fahrzeuggeschwindigkeitsbegrenzungsbetriebs gemäß sowohl der erhaltenen Änderungsrate des Beschleunigerpedalwegs als auch der Längsfahrtlastrate ändert, die unmittelbar vor der Aufhebung des Fahrzeuggeschwindigkeitsbegrenzungsbetriebs erfasst wird.

14. System zum Begrenzen einer Fahrzeuggeschwindigkeit nach Anspruch 13, wobei die Übersetzungsverhältnisänderungsrate das Übersetzungsverhältnis, das um einen kleineren Grad geändert wird, wenn die Änderungsrate des Beschleunigerpedalwegs kleiner ist, durch Ändern des Übersetzungsverhältnis um einen größeren Grad korrigiert, wenn die erfasste Längsfahrtlastrate größer ist, und das Übersetzungsverhältnis, das um einen größeren Grad geändert wird, wenn die Änderungsrate des Beschleunigerpedalwegs größer ist, durch Ändern des Übersetzungsverhältnisses um einen kleineren Grad korrigiert, wenn die erfasste Längsfahrtlastrate kleiner ist.

15. System zum Begrenzen einer Fahrzeuggeschwindigkeit nach Anspruch 1 oder Anspruch 2, **dadurch gekennzeichnet, dass** es des Weiteren eine Querlasterfassungseinrichtung zum Erfassen zumindest einer Rate von einer Rate eines Lenkwinkels und einer Rate einer Querbeschleunigung aufweist, die auf das Fahrzeug in eine Querrichtung senkrecht zu einer Fahrtrichtung des Fahrzeugs aufgebracht wird, wobei die Übersetzungsverhältnisänderungseinrichtung das Übersetzungsverhältnis zu der Zeit der Aufhebung des Fahrzeuggeschwindigkeitsbegrenzungsbetriebs gemäß sowohl der Änderungsrate des Beschleunigerpedalwegs, die unmittelbar vor der Aufhebung des Fahrzeuggeschwindigkeitsbegrenzungsbetriebs erhalten wird, als auch der zumindest einen Rate von der Rate des Lenkwinkels, die unmittelbar vor der Aufhebung des Fahrzeuggeschwindigkeitsbegrenzungsbetriebs erfasst wird, und der Rate der Querbeschleunigung ändert, die unmittelbar vor der Aufhebung des Fahrzeuggeschwindigkeitsbegrenzungsbetriebs erfasst wird.

16. System zum Begrenzen einer Fahrzeuggeschwindigkeit nach Anspruch 15, wobei die Übersetzungsverhältnisänderungseinrichtung das Übersetzungsverhältnis, das um einen kleineren Grad geändert wird, wenn die Änderungsrate des Beschleunigerpedalwegs kleiner ist, durch Ändern des Übersetzungsverhältnisses um einen größeren Grad korrigiert, wenn die zumindest eine Rate von der Rate des Lenkwinkels und der Rate der Querbeschleunigung kleiner ist, und das Übersetzungsverhältnis, das um einen größeren Grad geändert wird, wenn die Änderungsrate des Beschleunigerpedalwegs größer ist, durch Ändern des Übersetzungsverhältnisses um einen kleineren Grad korrigiert, wenn die zumindest eine Rate von der Rate des Lenkwinkels und der Rate der Querbeschleunigung größer ist.

17. System zum Begrenzen einer Fahrzeuggeschwindigkeit nach einem der Ansprüche 1 bis 16, wobei:
die Übersetzungsverhältnisänderungseinrichtung einen Wechselschalter aufweist, der einen Änderungsmodus des Übersetzungsverhältnisses, wenn der Fahrzeuggeschwindigkeitsbegrenzungsbetrieb aufgehoben wird, zwischen einem ersten Modus, bei dem das Übersetzungsverhältnis auf der Grundlage einer ersten Übersetzungsverhältnisbestimmungsbedingung geändert wird, die auf der Grundlage der Fahrzeuggeschwindigkeit und zumindest einem/einer von dem Beschleunigerpedalweg und einer Differenzdrehzahl zwischen einer Drehzahl einer primären Antriebsvorrichtung des Fahrzeugs und einer Turbinendrehzahl eines Drehmomentwandlers festgelegt wird, und einem zweiten Modus schaltet, bei dem das Übersetzungsverhältnis auf der Grundlage einer zweiten Übersetzungsverhältnisbestimmungsbedingung geändert wird, die von der ersten Übersetzungsverhältnisbestimmungsbedingung verschieden ist,
der Wechselschalter angepasst ist, um abhängig von zumindest einem/einer von einem Charakter des Fahrzeugs und einer Leistung, die durch die primäre Antriebsvorrichtung des Fahrzeugs erzeugt wird, geschaltet zu werden.

18. System zum Begrenzen einer Fahrzeuggeschwindigkeit nach Anspruch 17, wobei das Schalten des Wechselschalters abhängig von dem Charakter des Fahrzeugs davon abhängig ausgeführt wird, ob das Fahrzeug eine Hochleistungsmaschine oder eine Niederleistungsmaschine hat und ob das Fahrzeug eine sanfte Beschleunigung oder eine kraftvolle Beschleunigung anfordert.

## Revendications

1. Système de limitation de vitesse de véhicule qui exécute une opération de limitation de vitesse de véhicule pour limiter une vitesse d'un véhicule en marche à une limite de vitesse de véhicule qui a été établie, lorsque la vitesse du véhicule en marche devient plus élevée que la limite de vitesse de véhicule, comportant :
un moyen de commande des vitesses pour établir un rapport de vitesse d'une transmission automatique sur la base de la vitesse du véhicule en marche qui varie avec une ouverture du papillon des gaz, où la vitesse du véhicule en marche est établie conformément à une ouverture du papillon des gaz requise déterminée sur la base d'une course de la pédale d'accélérateur, tandis que la limite de vitesse de véhicule est établie conformément à une limite d'ouverture du papillon des gaz à laquelle l'ouverture du papillon des gaz est limitée,
un moyen d'annulation de limite de vitesse de véhicule pour annuler l'opération de limitation de vitesse de véhicule, et
un moyen de détection de course de la pédale d'accélérateur pour détecter la course de la pédale d'accélérateur représentant une quantité d'appui sur une pédale d'accélérateur, **caractérisé par** le fait de comprendre :
un moyen de calcul de taux de changement de course de la pédale d'accélérateur pour calculer un taux de changement de la course de la pédale d'accélérateur d'après la course de la pédale d'accélérateur détectée par le moyen de détection de course de la pédale d'accélérateur ; et
un moyen de changement de rapport de vitesse pour changer le rapport de vitesse de la transmission automatique lorsque l'opération de limitation de vitesse de véhicule est annulée, selon le taux de changement de la course de la pédale d'accélérateur obtenu immédiatement avant annulation de l'opération de limitation de vitesse de véhicule.

2. Système de limitation de vitesse de véhicule selon la revendication 1, dans lequel le moyen d'annulation de limite de vitesse de véhicule annule l'opération de limitation de vitesse de véhicule lorsque le taux de changement de la course de la pédale d'accélérateur est supérieur ou égal à un taux de changement prédéterminé.

3. Système de limitation de vitesse de véhicule selon la revendication 1 ou 2, dans lequel le moyen de changement de rapport de vitesse change le rapport de vitesse au moment de l'annulation de l'opération de limitation de vitesse de véhicule à un plus petit degré à mesure que le taux de changement de la course de la pédale d'accélérateur immédiatement avant annulation de l'opération de limitation de vitesse de véhicule diminue, et change le rapport de vitesse par un plus grand degré à mesure que le taux de changement de la course de la pédale d'accélérateur immédiatement avant annulation de l'opération de limitation de vitesse de véhicule augmente.

4. Système de limitation de vitesse de véhicule selon la revendication 3, dans lequel le moyen de changement de rapport de vitesse change le rapport de vitesse au moment de l'annulation de l'opération de limitation de vitesse de véhicule de sorte qu'un degré de rétrogradation de la transmission automatique diminue à mesure que le taux de changement de la course de la pédale d'accélérateur immédiatement avant annulation de l'opération de limitation de vitesse de véhicule diminue, et de sorte que le degré de rétrogradation augmente à mesure que le taux de changement de la course de la pédale d'accélérateur immédiatement avant annulation de l'opération de limitation de vitesse de véhicule augmente.

5. Système de limitation de vitesse de véhicule qui exécute une opération de limitation de vitesse de véhicule pour limiter une vitesse d'un véhicule en marche à une limite de vitesse de véhicule qui a été établie, lorsque la vitesse du véhicule en marche devient plus élevée que la limite de vitesse de véhicule, comportant :
un moyen de commande des vitesses pour établir un rapport de vitesse d'une transmission automatique, et
un moyen d'annulation de limite de vitesse de véhicule pour annuler l'opération de limitation de vitesse de véhicule, **caractérisé par** le fait de comprendre :
un moyen de détection de charge de déplacement longitudinal pour détecter un taux de charge d'un déplacement longitudinal appliqué au véhicule dans une direction longitudinale comme direction de marche du véhicule ; et
un moyen de changement de rapport de vitesse pour changer le rapport de vitesse de la transmission automatique lorsque l'opération de limitation de vitesse de véhicule est annulée, selon le taux de charge du déplacement longitudinal détectée immédiatement avant que l'opération de limitation de vitesse de véhicule ne soit annulée.

6. Système de limitation de vitesse de véhicule selon la revendication 5, dans lequel la vitesse du véhicule en marche est établie conformément à une ouverture du papillon des gaz requise déterminée sur la base d'une course de la pédale d'accélérateur, tandis que la limite de vitesse de véhicule est établie conformément à une limite d'ouverture du papillon des gaz à laquelle l'ouverture du papillon de gaz est limitée, et le moyen de commande des vitesses établit le rapport de vitesse de la transmission automatique sur la base de la vitesse du véhicule en marche qui varie avec l'ouverture du papillon des gaz.

7. Système de limitation de vitesse de véhicule selon la revendication 5 ou 6, dans lequel le moyen de changement de rapport de vitesse change le rapport de vitesse au moment de l'annulation de l'opération de limitation de vitesse de véhicule à un plus grand degré à mesure que le taux de charge du déplacement longitudinal détectée immédiatement avant annulation de l'opération de limitation de vitesse de véhicule augmente, et change le rapport de vitesse à un plus petit degré à mesure que le taux de charge du déplacement longitudinal détectée immédiatement avant annulation de l'opération de limitation de vitesse de véhicule diminue.

8. Système de limitation de vitesse de véhicule selon la revendication 7, dans lequel le moyen de changement de rapport de vitesse change le rapport de vitesse au moment de l'annulation de l'opération de limitation de vitesse de changement de sorte qu'un degré de rétrogradation de la transmission automatique augmente à mesure que le taux de charge du déplacement longitudinal détectée immédiatement avant annulation de l'opération de limitation de vitesse de véhicule augmente, et de sorte que le degré de rétrogradation diminue à mesure que le taux de charge du déplacement longitudinal détectée immédiatement avant annulation de l'opération de limitation de vitesse de véhicule diminue.

9. Système de limitation de vitesse de véhicule qui exécute une opération de limitation de vitesse de véhicule pour limiter une vitesse d'un véhicule en marche à une limite de vitesse de véhicule qui a été établie, lorsque la vitesse du véhicule en marche devient plus élevée que la limite de vitesse de véhicule, comportant :
un moyen de commande des vitesses pour établir un rapport de vitesse d'une transmission automatique, et
un moyen d'annulation de limite de vitesse de véhicule pour annuler l'opération de limitation de vitesse de véhicule, **caractérisé par** le fait de comprendre :
un moyen de détection de charge latérale pour détecter au moins l'un d'un taux d'un angle de braquage et d'un taux d'une accélération latérale appliquée au véhicule dans une direction latérale perpendiculaire à une direction de marche du véhicule ; et
un moyen de changement de rapport de vitesse pour changer le rapport de vitesse de la transmission automatique lorsque l'opération de limitation de vitesse de véhicule est annulée, selon ledit au moins l'un du taux de l'angle de braquage détecté immédiatement avant annulation de l'opération de limitation de vitesse véhicule et du taux de l'accélération latérale détectée immédiatement avant annulation de l'opération de limitation de vitesse de véhicule.

10. Système de limitation de vitesse de véhicule selon la revendication 9, dans lequel la vitesse du véhicule en marche est établie conformément à une ouverture du papillon des gaz requise déterminée sur la base d'une course de la pédale d'accélérateur, tandis que la limite de vitesse de véhicule est établie conformément à une limite d'ouverture du papillon des gaz à laquelle l'ouverture du papillon des gaz est limitée, et le moyen de commande des vitesses établit le rapport de vitesse de la transmission automatique sur la base de la vitesse du véhicule en marche qui varie avec l'ouverture du papillon des gaz.

11. Système de limitation de vitesse de véhicule selon la revendication 9 ou 10, dans lequel le moyen de changement de rapport de vitesse change le rapport de vitesse au moment de l'annulation de l'opération de limitation de vitesse de véhicule à un plus grand degré à mesure que ledit au moins l'un du taux de l'angle de braquage détecté immédiatement avant annulation de l'opération de limitation de vitesse de véhicule et du taux de l'accélération latérale détectée immédiatement avant annulation de l'opération de limitation de vitesse de véhicule diminue, et change le rapport de vitesse à un plus petit degré à mesure que ledit au moins l'un du taux de l'angle de braquage détecté immédiatement avant annulation de l'opération de limitation de vitesse de véhicule et du taux de l'accélération latérale détectée immédiatement avant annulation de l'opération de limitation de vitesse de véhicule augmente.

12. Système de limitation de vitesse de véhicule selon la revendication 11, dans lequel le moyen de changement de rapport de vitesse change le rapport de vitesse au moment de l'annulation de l'opération de limitation de vitesse de véhicule de sorte qu'un degré de rétrogradation de la transmission automatique augmente à mesure que ledit au moins l'un du taux de l'angle de braquage détecté immédiatement avant annulation de l'opération de limitation de vitesse de véhicule et du taux de l'accélération latérale détectée immédiatement avant annulation de l'opération de limitation de vitesse de véhicule diminue, et de sorte que le degré le rétrogradation diminue à mesure que ledit au moins l'un du taux de l'angle de braquage détecté immédiatement avant annulation de l'opération de limitation de vitesse de véhicule et du taux de l'accélération latérale détectée immédiatement avant annulation de l'opération de limitation de vitesse de véhicule augmente.

13. Système de limitation de vitesse de véhicule selon la revendication 1 ou 2, **caractérisé par** le fait de comprendre en plus un moyen de détection de charge de déplacement longitudinal pour détecter un taux de charge d'un déplacement longitudinal appliqué au véhicule dans une direction longitudinale comme direction de marche du véhicule,
où le moyen de changement de rapport de vitesse change le rapport de vitesse au moment de l'annulation de l'opération de limitation de vitesse de véhicule, selon à la fois le taux de changement de la course de la pédale d'accélérateur obtenu et le taux de charge du déplacement longitudinal détectée immédiatement avant annulation de l'opération de limitation de vitesse de véhicule.

14. Système de limitation de vitesse de véhicule selon la revendication 13, dans lequel le moyen de changement de rapport de vitesse corrige le rapport de vitesse qui est changé à un plus petit degré à mesure que le taux de changement de la course de la pédale d"accélérateur diminue, en changeant le rapport de vitesse à un plus grand degré à mesure que le taux de charge détectée du déplacement longitudinal augmente, et corrige le rapport de vitesse qui est changé à un plus grand degré à mesure que le taux de changement de la course de la pédale d'accélérateur augmente, en changeant le rapport de vitesse à un plus petit degré à mesure que le taux de charge détectée du déplacement longitudinal diminue.

15. Système de limitation de vitesse de véhicule selon la revendication 1 ou 2, **caractérisé par** le fait de comprendre en plus un moyen de détection de charge latérale pour détecter au moins l'un d'un taux d'un angle de braquage et d'un taux d'une accélération latérale appliquée au véhicule dans une direction latérale perpendiculaire à une direction de marche du véhicule, où le moyen de changement de rapport de vitesse change le rapport de vitesse au moment de l'annulation de l'opération de limitation de vitesse de véhicule, selon à la fois le taux de changement de la course de la pédale d'accélérateur obtenu immédiatement avant annulation de l'opération de limitation de vitesse de véhicule et ledit au moins l'un du taux de l'angle de braquage détecté immédiatement avant annulation de l'opération de limitation de vitesse de véhicule et du taux de l'accélération latérale détectée immédiatement avant annulation de l'opération de limitation de vitesse de véhicule.

16. Système de limitation de vitesse de véhicule selon la revendication 15, dans lequel le moyen de changement de rapport de vitesse corrige le rapport de vitesse qui est changé à un plus petit degré à mesure que le taux de changement de la course de la pédale d'accélérateur diminue, en changeant le rapport de vitesse à un plus grand degré à mesure que ledit au moins l'un du taux de l'angle de braquage et du taux de l'accélération latérale diminue, et corrige le rapport de vitesse qui est changé à un plus grand degré à mesure que le taux de changement de la course de la pédale d'accélérateur augmente, en changeant le rapport de vitesse à un plus petit degré à mesure que ledit au moins l'un du taux de l'angle de braquage et du taux de l'accélération latérale augmente.

17. Système de limitation de vitesse de véhicule selon l'une quelconque des revendications 1 à 16, dans lequel :
le moyen de changement de rapport de vitesse comporte un commutateur qui commute un mode de changement du rapport de vitesse lorsque l'opération de limitation de vitesse de véhicule est annulée, entre un premier mode dans lequel le rapport de vitesse est changé sur la base d'une première condition de détermination de rapport de vitesse établie sur la base de la vitesse de véhicule et au moins l'une de la course de la pédale d'accélérateur et d'une différence rotationnelle entre une vitesse de rotation d'un moteur principal du véhicule et une vitesse de turbine d'un convertisseur de couple, et un deuxième mode dans lequel le rapport de vitesse est changé sur la base d'une deuxième condition de détermination de rapport de vitesse différente de la première condition de détermination de rapport de vitesse,
le commutateur étant adapté pour être commuté en fonction d'au moins l'un d'un caractère du véhicule et d'une puissance générée par le moteur principal du véhicule.

18. Système de limitation de vitesse de véhicule selon la revendication 17, dans lequel la commutation du commutateur en fonction du caractère du véhicule est effectuée selon que le véhicule possède un moteur de grande puissance ou un moteur à faible puissance, et selon que le véhicule requiert une légère accélération ou une puissante accélération.
